# EUROPEAN PATENT SPECIFICATION

(11) **EP 2 254 962 B1**
(45) Date of publication and mention of the grant of the patent: **27.04.2016**
(21) Application number: 09718202.6
(22) Date of filing: 03.03.2009
(51) Int. Cl.: C09J 153/00, B32B 27/08

(54) **ANTISTATIC BLOCK COPOLYMER PRESSURE SENSITIVE ADHESIVES AND ARTICLES**
ANTISTATISCHE BLOCKCOPOLYMER-HAFTKLEBER UND ARTIKEL
ADHÉSIFS ANTISTATIQUES SENSIBLES À LA PRESSION À BASE DE COPOLYMÈRES BLOCS, ET ARTICLES ASSOCIÉS

(30) Priority: 07.03.2008 US 34694 P
(43) Date of publication of application: 01.12.2010
(73) Proprietor: 3M Innovative Properties Company, Saint Paul, MN 55133-3427 (US)
(72) Inventor: TSE, Kiu-Yuen, Saint Paul, Minnesota 55133-3427 (US); BHARTI, Vivek, Saint Paul, Minnesota 55133-3427 (US); EVERAERTS, Albert, I., Saint Paul, Minnesota 55133-3427 (US); JOSEPH, Eugene G., Blacksburg Virginia 24060 (US); PURGETT, Mark D., Saint Paul, Minnesota 55133-3427 (US); XIA, Jianhui, Saint Paul, Minnesota 55133-3427 (US); SATRIJO, Andrew, Saint Paul, Minnesota 55133-3427 (US); YOON, Wanshik, Seoul 150-705 (KR)
(74) Representative: Vossius & Partner Patentanwälte Rechtsanwälte mbB
(86) International application number: PCT/US2009/035814
(87) International publication number: WO 2009/111433

(56) References cited:
- EP-A- 0 921 170
- EP-A- 1 308 493
- WO-A-2004/046215
- GB-A- 1 426 497
- JP-A- 7 278 400
- JP-A- 2000 204 329
- US-A- 4 925 765
- US-A1- 2006 024 521
- US-B1- 6 734 256

## Description

### Technical Field

Antistatic block copolymer pressure sensitive adhesives and articles comprising them are provided.

### Background

Electronic equipment and instruments can be susceptible to build up of static electrical charge during manufacturing, handling, shipping, or use. Discharge of static electrical charge through electronic components (such as semiconductor components) can damage the components. Electronic equipment such as those having a smooth plastic part or a glass part (including an optically clear plastic or glass part) can be susceptible to the accumulation of dust and debris as a result of the build up of static electrical charge.

Adhesives have been used in the manufacture of electronic equipment such as, for example, to temporarily or permanently adhere one component or part to another. Such adhesives in the form of, for example, transfer adhesive or transfer tape can comprise a release liner. Removal of the release liner from the adhesive, for example after the adhesive is adhered to a component or part of the electronic equipment or instrument, can generate a static charge. Furthermore, a static charge can build up when one component or part is removed from, or repositioned on, another component or part. EP 1308 493, US 6734256, US 20060024521, EP0921170, WO2004046215, JP2000204329. disclose various block copolymer adhesive compositons comprising additives.

### Summary

There is a need for an antistatic pressure sensitive adhesive, including an optically clear antistatic pressure sensitive adhesive.

In one aspect, a composition is provided comprising an antistatic agent and a first block copolymer. The first block copolymer comprises at least two hard A block polymeric units each independently having a T_{g} of at least 50°C, and at least one soft B block (meth)acrylic polymeric unit having a T_{g} no greater than 20°C. The first block copolymer comprises a total of 10 weight percent to 60 weight percent of the hard A block polymeric units. The composition is an antistatic pressure sensitive adhesive. As regards the antistatic agent, it is dissolved, dispersed, or suspended within the composition, and is selected from a group consisting of a salt, a metal, an electrically conductive metal oxide, and a combination thereof, wherein the electrically conductive metal oxide is a mixed metal oxide or is selected from the group consisting of oxides of tin, indium, silver, vanadium, cobalt, iron, and molybdenum and wherein salts have an anion selected from the group consisting of a halide, perchlorate, nitrate, tetrafluoroborate, hexafluorostannate, hexafluorophosphate, hexafluoroantimonate, methanesulfonate, trifluoromethanesulfonate, acetate, trifluoroacetate, benzoate, pentafluorobenzoate, 4-trifluoromethylbenzoate, benzenesulfonate, toluenesulfonate, 4-(trifluoromethyl)benzenesulfonate, bis(trifluoromethylsulfonyl)imide, bis(pentafluoroethylsulfonyl)imide, and tris(trifluoromethylsulfonyl)methide.

In another aspect, an article is provided comprising a first substrate having a first surface, and a composition as defined above.

The composition is an antistatic pressure sensitive adhesive adjacent the first surface of the substrate.

### Detailed Description

In several places throughout the application, guidance is provided through lists of examples, which examples can be used in various combinations. In each instance, the recited list serves only as a representative group.

Any recitation of numerical ranges by endpoints includes all numbers subsumed within that range (e.g., 1 to 5 includes 1, 1.5, 2, 2.75, 3, 3.80, 4, 5).

The terms "a," "an," "the," "at least one," and "one or more" are used interchangeably. Thus, for example, a composition that comprises "an" antistatic agent can be interpreted to mean that the composition includes "one or more" antistatic agents.

The term "block copolymer" refers to a linear, a radial, or a star copolymer comprising segments or blocks of homopolymeric or copolymeric chains. The segments or blocks of homopolymeric or copolymeric chains can have different chemical compositions, different physical properties (e.g., glass transition temperature or solubility parameter), or both.

The term "(meth)acrylate" refers to either an acrylic acid ester, a methacrylic acid ester, or a combination of an acrylic acid ester and a methacrylic acid ester.

The terms "(meth)acrylic polymer" and "(meth)acrylic polymeric" refer to a polymer prepared from at least one (meth)acrylate monomer.

The term "inorganic salt" refers to a salt in which the anion and the cation are an inorganic anion and cation.

The term "organic salt" refers to a salt in which at least one of the anion or cation is an organic anion or cation (i.e., having at least one carbon atom).

The term "pressure sensitive adhesive" refers to an adhesive that exhibits aggressive and persistent tack, adhesion to a substrate with no more than finger pressure, and sufficient cohesive strength to be removed cleanly from the substrate.

The term "antistatic" refers to the capability to prevent, dissipate, or remove a static charge.

The term "phr" refers to the weight proportion, calculated as parts per one hundred parts of a base composition, of antistatic agents, tackifiers, and/or plasticizers in the base composition. For example "5 phr salt based on dry polymer" in a composition refers to 5 parts by weight of salt per 100 parts by weight of dry polymer.

The composition comprises an antistatic agent and a first block copolymer comprising at least two hard A block polymeric units each independently having a T_{g} of at least 50°C, and at least one soft B block (meth)acrylic polymeric unit having a T_{g} no greater than 20°C, wherein the first block copolymer comprises a total of 10 weight percent to 60 weight percent of the hard A block polymeric units, and wherein the composition is an antistatic pressure sensitive adhesive. The weight percent of the hard A block polymeric units is based on a total weight of the first block copolymer.

The first block copolymer can comprise a total of at least 10 weight percent, at least 15 weight percent, at least 20 weight percent, at least 25 weight percent, at least 30 weight percent, at least 35 weight percent, at least 40 weight percent, at least 45 weight percent, at least 50 weight percent, at least 55 weight percent, at least 57 weight percent, or at least 59 weight percent of the hard A block polymeric units. The first block copolymer can comprise a total of no greater than 15 weight percent, no greater than 20 weight percent, no greater than 25 weight percent, no greater than 30 weight percent, no greater than 35 weight percent, no greater than 40 weight percent, no greater than 45 weight percent, no greater than 50 weight percent, no greater than 55 weight percent, or no greater than 60 weight percent of the hard A block polymeric units.

The hard A block polymeric units can independently be, for example, (meth)acrylic polymeric units (i.e., prepared from reactants comprising one or more (meth)acrylate monomers) or styrenic polymeric units (i.e., prepared from reactants comprising one or more styrenic monomers). At least one of the hard A block polymeric units can be prepared from reactants comprising an alkyl (meth)acrylate. In some embodiments, the hard A block polymeric units are prepared from reactants comprising both (meth)acrylate monomers and styrenic monomers. In some embodiments, each hard A block polymeric unit is prepared from reactants comprising the same monomers. In other embodiments, each hard A block polymeric unit is prepared from reactants comprising different monomers.

Suitable monomers for the hard block, for the soft block, or both blocks are often (meth)acrylate monomers. (Meth)acrylate monomers include alkyl (meth)acrylates, aryl (meth)acrylates, and aralkyl (meth)acrylates. Alkyl (meth)acrylates can include at least one linear, branched, or cyclic structure. Non-limiting examples of alkyl (meth)acrylates (without consideration of the T_{g}) include methyl methacrylate, ethyl methacrylate, n-butyl methacrylate, isobutyl methacrylate, tert-butyl methacrylate, neopentyl methacrylate, cyclohexyl methacrylate, isobornyl methacrylate, hexyl methacrylate, octyl methacrylate, isooctyl methacrylate, decyl methacrylate, dodecyl methacrylate, isotridecyl methacrylate, tetradecyl methacrylate, hexadecyl methacrylate, octadecyl methacrylate, eicosyl methacrylate, behenyl methacrylate, methyl acrylate, ethyl acrylate, n-butyl acrylate, isobutyl acrylate, tert-butyl acrylate, neopentyl acrylate, cyclohexyl acrylate, isobornyl acrylate, hexyl acrylate, octyl acrylate, isooctyl acrylate, decyl acrylate, dodecyl acrylate, isotridecyl acrylate, tetradecyl acrylate, hexadecyl acrylate, octadecyl acrylate, eicosyl acrylate, and behenyl acrylate. Non-limiting examples of aryl (meth)acrylates (without consideration of the T_{g}) include phenyl methacrylate, phenyl acrylate, 4-methylphenyl methacrylate, 4-methylphenyl acrylate, 1-naphthyl methacrylate, 1-naphthyl acrylate, 2-naphthyl methacrylate, and 2-naphthyl acrylate. Non-limiting examples of aralkyl (meth)acrylates (without consideration of the T_{g}) include benzyl methacrylate and benzyl acrylate. Non-limiting examples of styrenic monomers (without consideration of the T_{g}) include styrene, alpha-methylstyrene, 2-methylstyrene, and 4-methylstyrene.

In some embodiments, the hard A block polymeric units are independently prepared from reactants comprising methyl methacrylate, ethyl methacrylate, n-butyl methacrylate, isobornyl methacrylate, phenyl methacrylate, styrene, or combinations thereof. In some embodiments, each hard A block polymeric unit is independently a homopolymeric unit prepared from reactants comprising methyl methacrylate or styrene.

The hard A block polymeric units can be prepared from reactants comprising methacrylate monomers. In some embodiments, the hard A block polymeric units are independently homopolymeric units. In other embodiments, the hard A block polymeric units are independently copolymeric units (i.e., they independently are prepared from reactants independently comprising more than one monomer). In some embodiments, the hard A block polymeric units can contain up to 10 weight percent of a polar monomer based on the weight of the A block polymeric units. Suitable polar monomers include, for example, (meth)acrylic acid, a (meth)acrylamide, or a hydroxyalkyl (meth)acrylate. These polar monomers can be used, for example, to adjust the glass transition temperature (T_{g}) and other physical properties such as, for example, the cohesive strength of the hard A block polymeric units.

The hard A block polymeric units can independently have a glass transition temperature (T_{g}) of at least 50°C, at least 60°C, at least 70°C, at least 80°C, at least 90°C, at least 100°C, at least 110°C, at least 120°C, at least 130°C, at least 140°C, or at least 150°C. The hard A block polymeric units can independently have a glass transition temperature no greater than 150°C, no greater than 140C, no greater than 130°C, no greater than 120°C, no greater than 110°C, no greater than 100°C, no greater than 90°C, no greater than 80°C, no greater than 70°C, or no greater than 60°C. The T_{g} can be determined by using, for example, differential scanning calorimetry (DSC).

The hard A block polymeric units can have any useful weight average molecular weight. The weight average molecular weight (M_{w}) of each hard A block polymeric unit can independently be at least 10,000 grams per mole, at least 20,000 grams per mole, at least 30,000 grams per mole, at least 40,000 grams per mole, at least 50,000 grams per mole, at least 60,000 grams per mole, at least 70,000 grams per mole, at least 80,000 grams per mole, at least 90,000 grams per mole, at least 100,000 grams per mole, at least 120,000 grams per mole, or at least 150,000 grams per mole. The weight average molecular weight of each hard A block polymeric unit can independently be no greater than 150,000 grams per mole, no greater than 120,000 grams per mole, no greater than 100,000 grams per mole, no greater than 80,000 grams per mole, no greater than 60,000 grams per mole, no greater than 50,000 grams per mole, no greater than 40,000 grams per mole, no greater than 30,000 grams per mole, no greater than 20,000 grams per mole, no greater than 15,000 grams per mole, or no greater than 10,000 grams per mole.

The soft B block polymeric unit can be prepared from reactants comprising (meth)acrylate monomers. Non-limiting examples of (meth)acrylate monomers are described above. In some embodiments, the soft B block polymeric unit is prepared from reactants comprising acrylate monomers such as alkyl acrylate monomers. The acrylate monomers can have alkyl groups of no greater than 22 carbon atoms, no greater than 20 carbon atoms, no greater than 18 carbon atoms, no greater than 16 carbon atoms, no greater than 14 carbon atoms, no greater than 12 carbon atoms, no greater than 10 carbon atoms, no greater than 8 carbon atoms, no greater than 6 carbon atoms, no greater than 4 carbon atoms, or no greater than 2 carbon atoms. For example, the soft B block polymeric unit can be prepared from reactants comprising methyl acrylate, ethyl acrylate, n-butyl acrylate, n-hexyl acrylate, octyl acrylate, isooctyl acrylate, 2-ethylhexyl acrylate, doedecyl acrylate, isotridecyl acrylate, or octadecyl acrylate. In some embodiments, the soft B block polymeric unit is a homopolymeric unit prepared from reactants comprising n-butyl acrylate, isooctyl acrylate, or 2-ethylhexyl acrylate. In some embodiments, the soft B block polymeric unit can be prepared from reactants comprising (or further comprising) other ethylenically unsaturated monomers such as vinyl esters, meth(acrylamides), or a combination thereof. In some embodiments, the soft B block polymeric unit can contain up to 10 weight percent of a polar monomer based on the weight of the B polymeric unit. Suitable polar monomers include, for example, (meth)acrylic acid, a (meth)acrylamide, or a hydroxyalkyl (meth)acrylate. These polar monomers can be used, for example, to adjust the T_{g} and other physical properties such as, for example, the cohesive strength of the soft B block polymeric unit. In some embodiments, the soft B polymeric unit is a homopolymeric unit. In other embodiments, the soft B polymeric unit is a copolymeric unit.

The soft B block polymeric unit can have a glass transition temperature (T_{g}) of no greater than 20°C, no greater than 10°C, no greater than 0°C, no greater than -10°C, no greater than -20°C, no greater than -30°C, no greater than -40°C, no greater than -50°C, no greater than -60°C, no greater than -70°C, no greater than -80°C, no greater than -90°C, or no greater than -100°C. The soft B block polymeric unit can have a glass transition temperature of at least -100°C, at least -90°C, at least -80°C, at least -70°C, at least -60°C, at least -50°C, at least -40°C, at least -30°C, at least -20°C, at least -10°C, at least 0°C, at least 10°C, or at least 15°C.

The soft B block polymeric units can have any useful weight average molecular weight. The weight average molecular weight (M_{w}) of the soft B block polymeric unit can be at least 2,000 grams per mole, at least 5,000 grams per mole, at least 10,000 grams per mole, at least 20,000 grams per mole, at least 30,000 grams per mole, at least 40,000 grams per mole, at least 50,000 grams per mole, at least 60,000 grams per mole, at least 70,000 grams per mole, at least 80,000 grams per mole, at least 90,000 grams per mole, at least 100,000 grams per mole, at least 120,000 grams per mole, or at least 150,000 grams per mole. The weight average molecular weight of the soft B block polymeric unit can be no greater than 150,000 grams per mole, no greater than 120,000 grams per mole, no greater than 100,000 grams per mole, no greater than 80,000 grams per mole, no greater than 60,000 grams per mole, no greater than 50,000 grams per mole, no greater than 40,000 grams per mole, no greater than 30,000 grams per mole, no greater than 20,000 grams per mole, no greater than 15,000 grams per mole, no greater than 10,000 grams per mole, no greater than 5,000 grams per mole, or no greater than 2,000 grams per mole.

The first block copolymer comprises at least two hard A block polymeric units and at least one soft B block polymeric unit. In some embodiments, at least two hard block A polymeric units are each covalently bonded to at least one soft B block polymeric unit. In some embodiments, the first block copolymer comprises more than two hard A block polymeric units and/or more than one soft B block polymeric unit. Each hard A block polymeric unit can independently be a thermoplastic polymeric unit, and each soft B block polymeric unit can independently be an elastomeric polymeric unit. The hard A block polymeric units can, independently or together, provide structural and cohesive strength for the first block copolymer of the composition.

The first block copolymer can comprise a triblock structure (i.e., it can comprise, for example, an A-B-A structure). In a triblock structure, each hard A block polymeric unit can be an end block polymeric unit (i.e., the hard block forms the ends of the first block copolymer), and a soft B block polymeric unit can be a midblock polymeric unit (i.e., a soft B block forms a middle portion of the first block copolymer). Alternatively, the first block copolymer can comprise a star-block structure (i.e., it can comprise an (A-B)ₙ structure, where n is an integer of at least 3). Star-block copolymers, which have a central point from which various branches extend, can also be referred to as radial copolymers. Alternatively, the first block copolymer can comprise a multiblock structure (i.e., it can comprise, for example, an A-B-A-B-A structure).

In some embodiments, the first block copolymer comprises a discrete block that is bonded to another discrete block by a covalent bond. That is, in some embodiments the transition between blocks is a sharp transition wherein the end of one block is bonded to the beginning of another block such that the transition from one block to another block is substantially free of a region having a combination of each of the monomer units of both blocks. Such sharp transitions can result from the preparation of the block copolymer by, for example, a living anionic polymerization method. Other methods (e.g., a photoiniferter method) can result in block copolymers with less discrete blocks and less sharp transitions between the blocks.

The first block copolymer can have any useful weight average molecular weight. The first block copolymer can have a weight average molecular weight of at least 20,000 grams per mole, at least 25,000 grams per mole, at least 30,000 grams per mole, at least 35,000 grams per mole, at least 40,000 grams per mole, at least 50,000 grams per mole, at least 100,000 grams per mole, at least 150,000 grams per mole, at least 200,000 grams per mole, at least 250,000 grams per mole, at least 350,000 grams per mole, or at least 450,000 grams per mole. The first block copolymer can have a weight average molecular weight of no greater than 500,000 grams per mole, no greater than 400,000 grams per mole, no greater than 300,000 grams per mole, no greater than 200,000 grams per mole, no greater than 100,000 grams per mole, no greater than 50,000 grams per mole, no greater than 45,000 grams per mole, no greater than 40,000 grams per mole, no greater than 35,000 grams per mole, no greater than 30,000 grams per mole, no greater than 25,000 grams per mole, or no greater than 20,000 grams per mole.

The first block copolymer can have an ordered multiphase morphology, at least at temperatures in the range of 20°C to 150°C. For example, the first block copolymer can have a morphology comprising more than one phase or more than two phases. For example, the first block copolymer can have at least one hard A block polymeric phase and at least one soft B block polymeric phase. In some embodiments, the solubility parameters of each or all of the hard A block polymeric units (solubility parameters of the hard A block polymeric units can be the same or different) are different from the solubility parameter of the soft B block polymeric unit. Such a difference can result in phase separation of the hard A blocks and the soft B block. The first block copolymer can have regions of reinforcing hard A block polymeric unit domains (the domains can be small, e.g., they can be nanodomains, which refers to domains in the nanometer range such as in the range of 1 to 100 nanometers or in the range of 1 to 200 nanometers) in a matrix of the softer, elastomeric first soft B block polymeric units. That is, the first block copolymer can have a discrete, discontinuous hard A block polymeric phase in a substantially continuous soft B block polymeric phase. Such an ordered multiphase morphology can result from sharp transitions between the blocks (e.g. between a hard block polymeric unit and a soft block polymeric unit).

The composition can comprise one first block copolymer having a triblock structure. The composition can comprise more than one block copolymer having a triblock structure. Each block copolymer having a triblock structure can have a different molecular weight, a different polydispersity index, or both. Each block copolymer having a triblock structure can comprise hard and soft block polymeric units having different molecular weights, different glass transition temperatures, or both. For example, a composition can comprise more than one block copolymer having a triblock structure wherein the block copolymers have the same weight average molecular weight, and wherein each copolymer has a different proportion of hard block polymeric unit (or a hard block polymeric unit prepared from different monomers). Alternatively, a composition can comprise more than one block copolymer having a triblock structure wherein the block copolymers have different weight average molecular weights, and wherein each copolymer has the same proportion of hard block polymeric unit (or a hard block polymeric unit prepared from the same monomers).

The composition can further comprise a second block copolymer comprising at least one hard C block polymeric unit having a T_{g} of at least 50°C, and at least one soft D block polymeric unit having a T_{g} of no greater than 20°C. Each hard C block polymeric unit can independently have a glass transition temperature (T_{g}) of at least 50°C, at least 60°C, at least 70°C, at least 80°C, at least 90°C, at least 100°C, at least 110°C, at least 120°C, at least 130°C, at least 140°C, or at least 150°C. Each hard C block polymeric unit can independently have a glass transition temperature no greater than 150°C, no greater than 140°C, no greater than 130°C, no greater than 120°C, no greater than 110°C, no greater than 100°C, no greater than 90°C, no greater than 80°C, no greater than 70°C, or no greater than 60°C.

The second block copolymer can comprise a total of at least 10 weight percent, at least 15 weight percent, at least 20 weight percent, at least 25 weight percent, at least 30 weight percent, at least 35 weight percent, at least 40 weight percent, at least 45 weight percent, at least 50 weight percent, or at least 55 weight percent of the hard C block polymeric units. The second block copolymer can comprise a total of no greater than 15 weight percent, no greater than 20 weight percent, no greater than 25 weight percent, no greater than 30 weight percent, no greater than 35 weight percent, no greater than 40 weight percent, no greater than 45 weight percent, no greater than 50 weight percent, no greater than 55 weight percent, or no greater than 60 weight percent of the hard C block polymeric units.

The hard C block polymeric unit can be prepared from reactants comprising, for example, (meth)acrylate monomers or styrenic polymeric units (i.e., prepared from reactants comprising styrenic monomers). The hard C block polymeric unit can be prepared from reactants comprising a (meth)acrylate monomer such as an alkyl (meth)acrylate. In some embodiments, the hard C block polymeric unit is prepared from reactants comprising both (meth)acrylate monomers and styrenic monomers. In some embodiments, the hard C block polymeric unit is a homopolymeric unit. In other embodiments, the hard C block polymeric unit is a copolymeric unit (i.e., it is prepared from reactants comprising more than one monomer). Specific (meth)acrylate and styrenic monomers are described above. In some embodiments, the hard C block polymeric unit can contain up to 10 weight percent of a polar monomers based on the weight of the C block polymeric unit. Suitable of a polar monomer include, for example, (meth)acrylic acid, a (meth)acrylamide, or a hydroxyalkyl (meth)acrylate. The polar monomer can be used, for example, to adjust the T_{g} and other physical properties such as, for example, the cohesive strength of the hard C block polymeric units. In some embodiments, the hard C block polymeric unit is prepared from reactants comprising the same types of monomers (e.g., (meth)acrylic or styrenic) or substantially the same proportions of different types of monomers as the hard A block polymeric units of the first copolymer of the composition. In some embodiments, the hard A and C block polymeric units are prepared from reactants comprising the same monomers.

The hard C block polymeric unit can have any useful weight average molecular weight. The weight average molecular weight (M_{w}) of the hard C block polymeric unit can be at least 2,000 grams per mole, at least 5,000 grams per mole, at least 10,000 grams per mole, at least 20,000 grams per mole, at least 30,000 grams per mole, at least 40,000 grams per mole, at least 50,000 grams per mole, at least 60,000 grams per mole, at least 70,000 grams per mole, at least 80,000 grams per mole, at least 90,000 grams per mole, or at least 100,000 grams per mole. The weight average molecular weight of the hard C block polymeric unit can be no greater than no greater than 120,000 grams per mole, no greater than 100,000 grams per mole, no greater than 80,000 grams per mole, no greater than 60,000 grams per mole, no greater than 40,000 grams per mole, no greater than 20,000 grams per mole, no greater than 15,000 grams per mole, no greater than 10,000 grams per mole, no greater than 5,000 grams per mole, or no greater than 2,000 grams per mole.

The soft D block polymeric unit can be prepared from reactants comprising (meth)acrylate monomers. In some embodiments, the soft D block polymeric unit is prepared from reactants comprising acrylate monomers such as alkyl acrylate monomers. Non-limiting examples of (meth)acrylate monomers are described above. In some embodiments, the soft D block polymeric unit can be prepared from reactants comprising (or further comprising) other ethylenically unsaturated monomers such as vinyl esters, meth(acrylamides), or a combination thereof. In some embodiments, the soft D block polymeric unit can contain up to 10 weight percent of a polar monomer based on the weight of the D block polymeric units. Suitable polar monomers include, for example, (meth)acrylic acid, a (meth)acrylamide, or a hydroxyalkyl (meth)acrylate. These polar monomers can be used, for example, to adjust the T_{g} and other physical properties such as, for example, the cohesive strength of the soft D block polymeric unit. In some embodiments, the soft D block polymeric unit is a homopolymeric unit.

The soft D block polymeric unit can have a glass transition temperature (T_{g}) of no greater than 20°C, no greater than 10°C, no greater than 0°C, no greater than -10°C, no greater than -20°C, no greater than -30°C, no greater than -40°C, no greater than -50°C, no greater than -60°C, no greater than -70°C, no greater than -80°C, no greater than -90°C, or no greater than -100°C. The soft D block polymeric unit can have a glass transition temperature of at least -100°C, at least -90°C, at least -80°C, at least -70°C, at least -60°C, at least -50°C, at least -40°C, at least -30°C, at least -20°C, at least -10°C, at least 0°C, or at least 10°C.

The soft D block polymeric unit can have any useful weight average molecular weight. The weight average molecular weight (M_{w}) of the soft D block polymeric unit can independently be at least 2,000 grams per mole, at least 5,000 grams per mole, at least 10,000 grams per mole, at least 20,000 grams per mole, at least 30,000 grams per mole, at least 40,000 grams per mole, at least 50,000 grams per mole, at least 60,000 grams per mole, at least 70,000 grams per mole, at least 80,000 grams per mole, at least 90,000 grams per mole, at least 100,000 grams per mole, at least 120,000 grams per mole, or at least 150,000 grams per mole. The weight average molecular weight of the soft D block polymeric unit can independently be no greater than 150,000 grams per mole, no greater than 120,000 grams per mole, no greater than 100,000 grams per mole, no greater than 80,000 grams per mole, no greater than 60,000 grams per mole, no greater than 40,000 grams per mole, no greater than 20,000 grams per mole, no greater than 15,000 grams per mole, no greater than 10,000 grams per mole, no greater than 5,000 grams per mole, or no greater than 2,000 grams per mole.

The second block copolymer can have any useful weight average molecular weight. The second block copolymer can have a weight average molecular weight of no greater than 200,000, no greater than 150,000, no greater than 100,000, no greater than 75,000, no greater than 50,000, no greater than 25,000, no greater than 20,000, no greater than 15,000, no greater than 10,000, or no greater than 5,000 grams per mole. The second block copolymer can have a weight average molecular weight of at least 5,000, at least 10,000, at least 12,000, at least 18,000, at least 22,000, at least 25,000, at least 30,000, at least 40,000, at least 50,000, at least 70,000, at least 90,000, at least 100,000, at least 120,000, or at least 150,000 grams per mole.

The second block copolymer comprises at least one hard C block polymeric unit and at least one soft D block polymeric unit. For example, a hard C block polymeric unit can be covalently bonded to a soft D block polymeric unit. The hard C block polymeric unit can be a thermoplastic polymeric unit, and the soft D block polymeric unit can be an elastomeric polymeric unit. The hard C block polymeric unit can provide structural and cohesive strength for the second block copolymer of the composition. In some embodiments, the second block copolymer is a diblock copolymer.

The composition can comprise one second block copolymer having a diblock structure. The composition can comprise more than one block copolymer having a diblock structure. The block copolymers having a diblock structure can be different. Each block copolymer having a diblock structure can have a different molecular weight, a different polydispersity index, or both. Each block copolymer having a diblock structure can comprise hard and soft block polymeric units having different molecular weights, different glass transition temperatures, or both. For example, a composition can comprise more than one block copolymer having a diblock structure wherein the block copolymers have the same weight average molecular weight, and wherein each copolymer has a different proportion of hard block polymeric unit (or a hard block polymeric unit prepared from different monomers). Alternatively, a composition can comprise more than one block copolymer having a diblock structure wherein the block copolymers have different weight average molecular weights, and wherein each copolymer has the same proportion of hard block polymeric unit (or a hard block polymeric unit prepared from the same monomers).

The monomer content of the hard and soft polymeric block units of the block copolymers can be calculated as a percentage of the total weight of the block copolymer (i.e., it can be calculated as a weight percentage). For example, a first block copolymer or a second block copolymer (or both) can comprise at least 5 weight percent, at least 10 weight percent, at least 15 weight percent, at least 20 weight percent, at least 25 weight percent, at least 30 weight percent, at least 35 weight percent, at least 40 weight percent, at least 45 weight percent, or at least 50 weight percent methyl methacrylate. A first block copolymer or a second block copolymer (or both) can comprise no greater than 5 weight percent, no greater than 10 weight percent, no greater than 15 weight percent, no greater than 20 weight percent, no greater than 25 weight percent, no greater than 30 weight percent, no greater than 35 weight percent, no greater than 40 weight percent, no greater than 45 weight percent, no greater than 50 weight percent, no greater than 55 weight percent, or no greater than 60 weight percent methyl methacrylate. A first block copolymer or a second block copolymer (or both) can comprise at least 5 weight percent, at least 10 weight percent, at least 15 weight percent, at least 20 weight percent, at least 25 weight percent, at least 30 weight percent, at least 35 weight percent, at least 40 weight percent, at least 45 weight percent, or at least 50 weight percent butyl acrylate or 2-ethylhexyl acrylate. A first block copolymer or a second block copolymer (or both) can comprise no greater than 5 weight percent, no greater than 10 weight percent, no greater than 15 weight percent, no greater than 20 weight percent, no greater than 25 weight percent, no greater than 30 weight percent, no greater than 35 weight percent, no greater than 40 weight percent, no greater than 45 weight percent, or no greater than 50 weight percent butyl acrylate or 2-ethylhexyl acrylate.

In some embodiments, at least one of the first and second block copolymers are prepared from reactants comprising (meth)acrylate monomers. In certain embodiments, each of the first and second block copolymers are prepared from reactants comprising (meth)acrylate monomers. In some embodiments, each of the hard A and C blocks and each of the soft B and D blocks are prepared from reactants comprising (meth)acrylate monomers. When each of the hard and soft blocks are prepared from reactants comprising (meth)acrylate monomer, the hard A and C blocks can be prepared from reactants comprising methyl methacrylate. When each of the hard and soft blocks are prepared from reactants comprising (meth)acrylate monomer, the soft B and D blocks can be prepared from reactants comprising at least one alkyl acrylate monomer. In some embodiments, the alkyl acrylate monomer comprises at least one of ethyl acrylate, propyl acrylate, n-butyl acrylate, iso-butyl acrylate, t-butyl acrylate, pentyl acrylate, hexyl acrylate, isooctyl acrylate, 2-ethylhexyl acrylate, dodecyl acrylate, isotridecyl acrylate, tetradecyl acrylate, hexadecyl acrylate, and octadecyl acrylate.

The first and second block copolymers of the composition can be compatible. In this context, the term "compatible" means that the first and second block copolymers of the composition can be combined to form a (macroscopically) homogeneous mixture comprising at least 10 weight percent, at least 20 weight percent, at least 30 weight percent, at least 40 weight percent, at least 50 weight percent, at least 60 weight percent, at least 70 weight percent, at least 80 weight percent, or at least 90 weight percent of the second block copolymer. In some embodiments, the first and second block copolymers of the composition can be combined to form a (macroscopically) homogeneous mixture comprising no greater than 95 weight percent, no greater than 90 weight percent, no greater than 80 weight percent, no greater than 70 weight percent, no greater than 60 weight percent, no greater than 50 weight percent, no greater than 40 weight percent, no greater than 30 weight percent, no greater than 20 weight percent, or no greater than 10 weight percent of the second block copolymer. Compatible first and second block copolymers can have, for example, hard A and C block polymeric units, respectively, having solubility parameters that are sufficiently close for the hard A and C blocks to form a macroscopically or microscopically single phase. In some embodiments, the solubility parameters of the hard A and C block polymeric units of the first and second block copolymers are the same. In some embodiments, the compatible first and second block copolymers each independently have hard blocks that are prepared from reactants comprising the same types of monomers (e.g., alkyl (meth)acrylate monomers). In some embodiments, the compatible first and second block copolymers have hard blocks that are prepared from reactants comprising the same monomers (e.g., methyl methacrylate).

Each of the block polymeric units and the block copolymers can independently have a low polydispersity index (PDI). As used herein, the term "polydispersity index" is a measure of the molecular weight distribution and can refer to the ratio of the weight average molecular weight (M_{w}) and the number average molecular weight (Mₙ) of the block polymeric units and/or the polymers and/or the segments of the polymer. Thus, block polymeric units or polymers that have weight average molecular weight equal to number average molecular weight have a polydispersity index of 1.0. The polydispersity index can be determined, for example, using gel permeation chromatography to measure the weight average molecular weight and the number average molecular weight. Block polymeric units and block copolymers of the compositions can have a polydispersity index of no greater than 2.0, no greater than 1.8, no greater than 1.6, no greater than 1.5, no greater than 1.4, no greater than 1.3, no greater than 1.2, or no greater than 1.1. Block polymeric units and block copolymers of the compositions can have a polydispersity index of at least 1.0, at least 1.1, at least 1.2, at least 1.3, at least 1.4, at least 1.5, at least 1.6, at least 1.7, at least 1.8, or at least 1.9.

Suitable block copolymers are further disclosed in, for example, U.S. Patent Nos. 7,255,920 (Everaerts et al.), 7,048,209 (Everaerts et al.), 6,806,320 (Everaerts et al.), and 6,734,256 (Everaerts et al.).

The first and second block copolymers (or the hard and soft block polymeric units which they comprise) can each independently be prepared using one or more of the methods suitable for the preparation of block copolymers, such as living anionic polymerization, atom transfer radical polymerization, and photoiniferter polymerization. In some embodiments, at least one of the first and second block copolymers is prepared by living anionic polymerization or group transfer polymerization. In some embodiments, at least one of the first and second block copolymers is prepared from reactants that are free of photoiniferter. In some embodiments, the composition is free of photoiniferter. In some embodiments, at least one of the composition, the first block copolymer, and the second block copolymers is free of chemical bonds (e.g., carbon-sulfur bonds) that can result from photoiniferter polymerization.

The composition can comprise a first block copolymer comprising a triblock copolymer. The first block copolymer can comprise copolymeric hard block polymeric units and a copolymeric soft block unit. In an alternative embodiment, the first block copolymer can comprise homopolymeric hard block polymeric units (which can be the same homopolymeric block units or different homopolymeric block units) and a copolymeric soft block unit. In yet another alternative embodiment, the first block copolymer can comprise homopolymeric hard block polymeric units (which can be the same homopolymeric block units or different homopolymeric block units) and a homopolymeric soft block unit. In still another alternative embodiment, the first block copolymer can comprise copolymeric hard block polymeric units and a homopolymeric soft block unit.

A composition comprising a first block copolymer can further comprise a second block copolymer. The second block copolymer can comprise a copolymeric hard block polymeric unit and a copolymeric soft block unit. In alternative embodiments, the second block copolymer can comprise a copolymeric hard block polymeric unit and a homopolymeric soft block unit. In other alternative embodiments, the second block copolymer can comprise a homopolymeric hard block polymeric unit and a homopolymeric soft block unit. In still other alternative embodiments, the second block copolymer can comprise a homopolymeric hard block polymeric unit and a copolymeric soft block unit.

The composition can have an ordered multiphase morphology, at least at temperatures of up to 180°C. In some embodiments, the composition can have an ordered multiphase morphology at temperatures of up to 150°C, up to 130°C, up to 100°C, up to 80°C, up to 60°C, up to 40°C, or up to 20°C. The composition can have at least a two-phase morphology comprising a hard block polymeric phase and a soft block polymeric phase. The hard and soft block polymeric phases can be phase separated. The hard block polymeric phase can comprise hard block polymeric units from the first block copolymer (i.e., hard A block polymeric units) or from the first and second block copolymers (i.e., hard A and C block polymeric units). Analytical methods such as transmission electron microscopy, differential scanning calorimetry (DSC), and dynamic mechanical analysis (DMA) can be used to detect an ordered multiphase morphology.

In some embodiments, the boundaries between the phases (which can be, for example, domains, microdomains, or nanodomains containing the hard polymeric blocks and a continuous phase containing the soft polymeric blocks) are distinct. In some embodiments, such distinct structures can form physical crosslinks in the first block copolymer, the first and second block copolymers, or both, which can result in increased overall cohesive strength without the need for chemical crosslinks (i.e., a crosslink comprising a chemical bond such as a covalent bond or an ionic bond). In some embodiments, the first and second block copolymers are independently free of chemical crosslinks.

The cohesive strength relates to the shear value of the composition. The shear value (measured as described herein below) can be at least 400 minutes, at least 500 minutes, at least 600 minutes, at least 700 minutes, at least 800 minutes, at least 1,000 minutes, at least 1,250 minutes, 1,500 minutes, at least 2,000 minutes, at least 3,000 minutes, at least 4,000 minutes, at least 5,000 minutes, at least 6,000 minutes, at least 7,000 minutes, at least 8,000 minutes, at least 9,000 minutes, or at least 10,000 minutes, when measured according to ASTM D3654-06. The shear value can be no greater than 10,000 minutes, no greater than 9,000 minutes, no greater than 8,000 minutes, no greater than 7,000 minutes, no greater than 6,000 minutes, no greater than 5,000 minutes, no greater than 4,000 minutes, no greater than 3,000 minutes, no greater than 2,000 minutes, no greater than 1,500 minutes, no greater than 1,250 minutes, no greater than 1,000 minutes, no greater than 800 minutes, no greater than 700 minutes, no greater than 600 minutes, no greater than 500 minutes, or no greater than 400 minutes when measured according to ASTM D3654-06. Surprisingly, antistatic pressure sensitive adhesives of the composition can have sufficient cohesive strength to exhibit these shear values without the need for chemical crosslinks.

In some embodiments, the composition is an optically clear antistatic pressure sensitive adhesive. As used herein, the term "optically clear" refers to a composition having a high optical luminous transmittance. In some embodiments, the luminous transmittance (in the range 400 nanometers to 700 nanometers) of a sample of the composition having a thickness of approximately 25 micrometers (0.001 inch) is at least 90%, at least 91%, at least 92%, at least 93%, at least 94%, at least 95%, at least 96%, at least 97%, at least 98%, at least 99%, at least 99.2%, at least 99.3%, at least 99.4%, at least 99.5%, at least 99.6%, at least 99.7%, at least 99.8%, or at least 99.9% when measured with a spectrophotometer. In some embodiments, the composition has a low haze, as measured with, for example, a spectrophotometer. In some embodiments, the haze value is less than 5%, less than 4%, less than 3%, less than 2.8%, less than 2.6%, less than 2.5%, less than 2.4%, less than 2.2%, less than 2%, less than 1.5%, or less than 1%. Both the haze and the percent luminous transmission can be measured using the method of ASTM D1003-07.

The composition can comprise a tackifier. In some embodiments, the composition comprises one tackifier. In other embodiments, the composition comprises more than one tackifier. The tackifier can be selected to be at least partially compatible with either or both the soft B or D block polymeric units, but it can, alternatively or in addition, be at least partially compatible with any or all of the hard A or C block polymeric units. In some embodiments, the tackifier is more compatible with one or more of the soft block polymeric units and is less compatible with the hard block polymeric units.

The tackifier can be a solid or a liquid at room temperature. A solid tackifier can have a number average molecular weight (Mₙ) of 10,000 grams per mole, or less, and can have a softening point at or above, for example, 40°C, 50°C, 60°C, or 70°C. A liquid tackifier can be a viscous liquid or semi-liquid at room temperature, and can have a softening point less than, for example, 35°C, 30°C, 25°C, 20°C, or 15°C. A solid tackifier can have a softening point above the softening point of a liquid tackifier.

Non-limiting examples of tackifiers include rosins and their derivatives (e.g., rosin esters), polyterpenes and modified polyterpene resins, hydrogenated terpene resins, coumarone-indene resins, and hydrocarbon resins (e.g., resins derived from alpha-pinene, beta-pinene, limonene, aliphatic hydrocarbons, aromatic hydrocarbons, and dicyclopentadiene). Suitable tackifiers also include at least partially hydrogenated resins. Examples of hydrogenated tackifiers include hydrogenated rosin esters, hydrogenated rosin acids, and hydrogenated hydrocarbon resins. In some embodiments, the tackifiers comprise rosin esters, hydrogenated terpene resins, or combinations thereof.

The composition can comprise at least 1 phr, at least 5 phr, at least 10 phr, at least 20 phr, at least 30 phr, at least 40 phr, at least 50 phr, at least 60 phr, at least 70 phr, at least 80 phr, at least 90 phr, at least 100 phr, at least 110 phr, at least 120 phr, at least 130 phr, at least 140 phr, or at least 150 phr tackifier, based on the total weight of the block copolymers. The composition can comprise no greater than 150 phr, no greater than 140 phr, no greater than 130 phr, no greater than 120 phr, no greater than 110 phr, no greater than 100 phr, no greater than 90 phr, no greater than 80 phr, no greater than 70 phr, no greater than 60 phr, no greater than 50 phr, no greater than 40 phr, no greater than 30 phr, no greater than 20 phr, no greater than 10 phr, no greater than 5 phr, or no greater than 1 phr tackifier, based on the total weight of the copolymers. In some embodiments, the composition is substantially free of tackifier. In this context, the term "substantially free of tackifier" means that the compositions comprises less than 1 phr, less than 0.5 phr, less than 0.2 phr, or less than 0.1 phr tackifier. In some embodiments, the composition is free of tackifier.

The composition can comprise a plasticizer. In some embodiments, the composition comprises one plasticizer. In other embodiments, the composition comprises more than one plasticizer. The plasticizer can plasticize either of the soft B or D block polymeric units, or both, but it can, alternatively or in addition, plasticize any or all of the hard A or C block polymeric units. Non-limiting examples of plasticizers include hydrocarbons (e.g., aromatics, paraffinics, or naphthenics), phthalates, phosphate esters, dibasic acid esters, fatty acid esters, polyethers, and combinations thereof. In some embodiments, the composition comprises at least one phosphate ester, phthalate, or dibasic acid ester.

The composition can comprise either or both a tackifier or plasticizer. In some embodiments, the antistatic block copolymer pressure sensitive adhesive composition is an optically clear antistatic block copolymer pressure sensitive adhesive composition comprising a plasticizer or a tackifier. In other embodiments, the antistatic block copolymer pressure sensitive adhesive composition is an optically clear antistatic block copolymer pressure sensitive adhesive composition comprising both a plasticizer and a tackifier.

The composition can comprise at least 1 phr, at least 5 phr, at least 10 phr, at least 15 phr, at least 20 phr, at least 25 phr, at least 30 phr, or at least 40 phr plasticizer, based on the total weight of the first and second block copolymers. The composition can comprise no greater than 40 phr, no greater than 30 phr, no greater than 25 phr, no greater than 20 phr, no greater than 15 phr, no greater than 10 phr, no greater than 5 phr, or no greater than 1 phr plasticizer, based on the total weight of the first and second block copolymers. In some embodiments, desired physical properties (e.g., peel strength, shear strength, or both) can be achieved with compositions comprising no greater than 10 phr plasticizer. In some embodiments, the composition is substantially free of plasticizer. In this context, the term "substantially free of plasticizer" means that the compositions comprises less than 1 phr, less than 0.5 phr, less than 0.2 phr, or less than 0.1 phr plasticizer. In some embodiments, the composition is free of plasticizer.

The composition comprises an antistatic agent. The antistatic agent is dissolved, dispersed, or suspended in the composition. The antistatic agent is selected from a salt, a metal, an electrically conductive metal oxide, or a combination thereof. In some embodiments, the antistatic agent is in the form of a particulate antistatic agent (i.e., particles that are dispersed or suspended in the composition). In some embodiments, the particulate antistatic agent comprises a colloidal antistatic agent. The composition can comprise more than one antistatic agent in any combination. The composition can comprise, for example, more than one salt, more than one metal, more than one metal oxide, a salt and a metal oxide, a salt and a metal, or a metal and a metal oxide.

Although antistatic agents have been used in conjunction with random copolymers, the effectiveness of antistatic agents in random copolymers does not necessarily predict their effectiveness of the (meth)acrylic block copolymers described herein. For example, random acrylic copolymers used for pressure-sensitive adhesive applications are typically totally amorphous, without any distinct phase separation, and often have a Tg below 25 degrees C. In contrast, the (meth)acrylic block copolymers described herein have at least two distinct phases contributed by the soft block polymeric units and the hard block polymeric units. These different polymeric block units can have significantly different Tg values and compositions. The antistatic agents are likely to be uniformly distributed throughout the random copolymer but are not likely to be uniformly distributed throughout the block copolymer. In some cases, the antistatic agent is likely to be distributed predominately in one phase (i.e., in the hard block polymeric unit or in the soft block polymeric unit) of the block copolymer. Additionally, unlike random acrylic copolymers, the (meth)acrylic block copolymers have a phase separated morphology such as, for example, a cylindrical, lamellar, or even bi-continuous structure. This separated morphology results in additional restrictions on the movement of antistatic agents or of a charged species from one side of the adhesive layer to the other in order to quickly dissipate the static charges of the adhesive layer.

If the antistatic agent is a salt, for example, the solubility of the antistatic agent in a random copolymer does not necessarily predict the solubility or extent of dissociation of the antistatic agent in the block copolymers. Because the block copolymers have two polymeric blocks with different compositions and glass transition temperatures, the solubility of the salts in the hard block and soft block polymeric units can be significantly different. That is, the salts can have a different solubility and a different extent of dissociation in the hard block and in the soft block polymeric units. Thus, the concentration and extent of dissociation of the salt throughout the block copolymer is often not uniform. In many embodiments, the ion mobility is likely to be substantially less in the hard block polymeric units compared to the soft block polymeric units. The hard block polymeric units might even impede ion mobility.

Suitable salts for use as an antistatic agent can comprise an inorganic anion or an organic anion (i.e., it can comprise a salt of an inorganic acid or a salt of an organic acid, respectively). The salt can comprise a salt of a strong acid. The salt can comprise a salt of an acid having a pKₐ no greater than 5, no greater than 4, no greater than 3, no greater than 2, no greater than 1, no greater than zero, no greater than -1, or no greater than -2. The salt can comprise a salt of an acid having a pKₐ at least -3, at least -2, at least -1, at least zero, at least 1, at least 2, at least 3, at least 4, or at least 4.5. In some embodiments, the salt comprises a salt of an acid having a pKₐ less than -3. In some embodiments, the salt comprises a halogenated anion (i.e., the salt is a salt of a halogenated acid). The halogenated anion can comprise fluorine, chlorine, bromine, iodine, or combinations thereof.

The salt comprises an anion that can be an inorganic anion or an organic anion, it is selected from halide (e.g., chloride, bromide, and iodide), perchlorate, nitrate, tetrafluoroborate, hexafluorostannate, hexafluorophosphate, and hexafluoroantimonate, methanesulfonate, trifluoromethanesulfonate, acetate, trifluoroacetate, benzoate, pentafluorobenzoate, 4-trifluoromethylbenzoate, benzenesulfonate, toluenesulfonate, 4-(trifluoromethyl)benzenesulfonate, bis(trifluormethylsulfonyl)imide, bis(pentafluoroethylsulfonyl)imide, and tris(trifluoromethylsulfonyl)methide.

The salt comprises a cation that can be an inorganic cation or an organic cation. Inorganic cations can include metal cations such as cations of elements of Group 1A (such as lithium cations, sodium cations, and potassium cations) and Group 1B (such as magnesium cations, calcium cations, strontium cations, and barium cations). In some embodiments, inorganic cations include metal cations of elements of Groups 3B, 4B, 5B, 6B, 7B, 8B, 11B, and 12B (for example, vanadium cations, molybdenum cations, manganese cations, iron cations, cobalt cations, nickel cations, copper cations, silver cations, or zinc cations). Organic cations can include organic cations comprising cations of elements of Groups 4A (e.g., disubstituted tin cations such as dialkyltin cations), 5A (e.g., tetrasubstituted ammonium cations such as tetraalkylammonium cations, pyridinium cations, imidiazolium cations, pyrrolidinium cations or tetrasubstituted phosphonium cations such as tetraarylphosphonium cations), or 6A (e.g., trisubstituted sulfonium cations such as triarylsulfonium cations).

Non-limiting examples of inorganic salts include lithium chloride, lithium bromide, lithium iodide, sodium iodide, lithium perchlorate, sodium perchlorate, lithium nitrate, silver nitrate, lithium tetrafluoroborate, sodium tetrafluoroborate, lithium hexafluorophosphate, sodium hexafluorophosphate, and lithium hexafluoroantimonate.

In some embodiments, organic salts comprise an organic cation and an inorganic anion. Non-limiting examples of such organic salts include tetramethylammonium chloride, tetramethylammonium bromide, pyridinium tetrafluoroborate, N-methylpyridinium hexafluoroantimonate, and tetraphenylphosphonium hexafluorophosphate.

In other embodiments, organic salts comprise an inorganic cation and an organic anion. Non-limiting examples of such organic salts include lithium trifluoroacetate, lithium trifluoromethanesulfonate, and lithium bis(trifluormethylsulfonyl)imide.

In still other embodiments, organic salts comprise an organic cation and an organic anion. Non-limiting examples of such organic salts include tetramethylammonium trifluoromethanesulfonate, butyltrimethylammonium bis(trifluoromethylsulfonyl)imide, dibutyldimethylammonium bis(pentafluoroethylsulfonyl)imide, tetraethylammonium tris(trifluoromethylsulfonyl)methide, and tributylmethylammonium bis(trifluoromethylsulfonyl)imide.

In some embodiments, the organic salt comprises an ionic liquid (i.e., an organic salt that is a liquid at or near room temperature). Non-limiting examples of ionic liquids include 1,3-dimethylimidazolium methyl sulfate, 1-ethyl-3-methylimidazolium chloride, 1-ethyl-3-methylimidazolium acetate, 1-ethyl-3-methylimidazolium tetrafluoroborate, 1-ethyl-3-methylimidazolium bis(trifluoromethylsulfonyl) imide, and 1-ethyl-3-methylimidazolium bis(pentafluoroethylsulfonyl) imide.

Examples of organic salts are disclosed in U.S. Patent Nos. 6,350,545 (Fanta et al.), 6,294,289 (Fanta et al.), 5,874,616 (Fanta et al.), and 5,514,493 (Waddell et al.).

The composition can comprise a salt that can be at least partially dissolved in the composition. The salt can be dissolved in, for example, the first block copolymer, the second block copolymer, or in a mixture of the first and second block copolymers. In some embodiments, for example in a composition having an ordered multiphase morphology, the salt can be dissolved in at least one of the hard block polymeric phase and the soft block polymeric phase. In some embodiments, the salt is dissolved in the soft block polymeric phase. In some embodiments, the salt is at least partially dissolved in a mixture of the first block copolymer and a tackifier or plasticizer (or both a tackifier or plasticizer), or in a mixture of the first and second block copolymers and a tackifier or plasticizer (or both a tackifier or plasticizer). In some embodiments, the salt is at least partially dissolved in at least one of the tackifier or the plasticizer. In some embodiments, the composition comprises a portion of the salt that is dissolved and a portion of the salt that is not dissolved. No greater than 100 percent, no greater than 90 percent, no greater than 80 percent, no greater than 70 percent, no greater than 60 percent, no greater than 50 percent, no greater than 40 percent, no greater than 30 percent, no greater than 20 percent, no greater than 10 percent, no greater than 5 percent, or no greater than 2 percent of the salt in the composition can be dissolved in the composition. At least 90 percent, less than 80 percent, less than 70 percent, less than 60 percent, less than 50 percent, less than 40 percent, less than 30 percent, less than 20 percent, less than 10 percent, less than 5 percent, or less than 2 percent of the salt in the composition can be dissolved in the composition.

The salt in the composition can be at least partially dissociated. In this context, the term "dissociated" refers to the separation of the cation and anion of the salt in the composition. In some embodiments, the salt is dissociated in the hard block polymeric phase, the soft block polymeric phase, or both. In some embodiments, the salt is dissociated in the soft block polymeric phase. At least one of the cation and anion of the dissociated salt can have mobility in the composition. In some embodiments, at least one of the cation and anion of the dissociated salt can have mobility in the hard block polymeric phase, the soft block polymeric phase, or both. In this context, the term "mobility" refers to a property of a cation, an anion, or both, to move within the composition or polymeric phase by, for example, diffusion, or as a result of a force such as an electric potential or charge. In some embodiments, one or both of the cation and anion has mobility in the soft block polymeric phase. When the composition comprises a plasticizer, the mobility of the cation, anion, or both can be higher than in a composition that does not comprise a plasticizer. In embodiments having more than one block polymeric phase (e.g., a hard block polymeric phase and a soft block polymeric phase), the morphology of the composition can provide a tortuous (i.e., a non-linear) path for the mobility of one or both of the cation and anion through the composition.

A salt can dissolve in and, in some embodiments, dissociate in at least one block copolymer of the composition. In some embodiments, the composition comprising the salt is substantially free of tackifier or plasticizer. In other embodiments, the composition comprising the salt is free of tackifier or plasticizer. In some embodiments, the block copolymer of the composition is substantially free of a polar monomer such as, for example, (meth)acrylic acid, a (meth)acrylamide, or a hydroxyalkyl (meth)acrylate. In other embodiments, the block copolymer of the composition is substantially free of a polar monomer such as, for example, (meth)acrylic acid, a (meth)acrylamide, or a hydroxyalkyl (meth)acrylate.

The antistatic agent can comprise a metal. In some embodiments, the antistatic agent comprises metal in the form of particulate metal. The metal can be any metal (e.g., a metal of Groups 1A, 2A, 3A, 4A, 5A, 3B, 4B, 5B, 6B, 7B, 8B, 11B, or 12B). Non-limiting examples of metals include magnesium, titanium, vanadium, molybdenum, manganese, iron, cobalt, nickel, copper, zinc, aluminum, or tin. Often, the metal is a metal of groups 8B or 11B (e.g., platinum, silver, or gold).

The metal can comprise an alloy or an intermetallic compound comprising a metal and at least one additional metal or non-metal. In some embodiments, the alloy or intermetallic compound comprises more than one metal. In some embodiments, the alloy or intermetallic compound comprises at least one metal and at least one non-metal. The alloy or intermetallic compound can comprise one or more metal from Groups 2A, 3A, 4A, 5A, 3B, 4B, 5B, 6B, 7B, 8B, 11B, or 12B. The alloy or intermetallic compound can comprise one or more non-metal from, for example, Groups 3A, 4A, 5A, or 6A. Alloys or intermetallic compounds can comprise, for example, chromium and molybdenum, chromium and iron, iron and nickel, nickel and copper, copper and silver, copper and gold, silver and gold, tin and silicon, aluminum and silicon, or iron and carbon.

The particulate metal can have any shape, cross section, or aspect ratio. The particulate metal can have a regular (i.e., symmetrical) or an irregular (i.e., unsymmetrical) shape. The particulate metal can have a spherical or spheroid shape. The particulate metal can have a polyhedral shape (e.g., a cubic or pyramidal shape). The particulate metal can have a shape of, for example, a powder, a flake, a plate, a wire, a fiber, or a tube. The particulate metal can comprise a single particle of particulate metal, or it can comprise a cluster or aggregate of particulate metal.

The Antistatic agent can comprise an electrically conductive metal oxide that is a mixed metal oxide or is selected from oxides of tin, indium, silver, vanadium, cobalt, iron, and molybdenum. In some embodiments, the metal oxide can comprise a mixed metal oxide (i.e., an oxide comprising more than one metal or more than one metal oxide). Non-limiting examples of mixed metal oxides include indium tin oxide (ITO) and antimony tin oxide (ATO).

The particulate metal oxide can have any shape, cross section, or aspect ratio. The particulate metal oxide can have a regular (i.e., symmetrical) or an irregular (i.e., unsymmetrical) shape. The particulate metal oxide can have a spherical or spheroid shape. The particulate metal oxide can have a polyhedral shape (e.g., a cubic or pyramidal shape). The particulate metal oxide can have a shape of, for example, a powder, a flake, a plate, a wire, a fiber, or a tube. The particulate metal oxide can comprise a single particle of particulate metal oxide, or it can comprise a cluster or aggregate of particulate metal

The particulate antistatic agent can have an average particle size no greater than 100 micrometers, no greater than 80 micrometers, no greater than 60 micrometers, no greater than 40 micrometers, no greater than 20 micrometers, no greater than 10 micrometers, not greater then 5 micrometers, no greater than 2 micrometers, no greater than 1 micrometer, no greater than 900 nanometers, no greater than 800 nanometers, no greater than 700 nanometers, no greater than 600 nanometers, no greater than 500 nanometers, no greater than 400 nanometers, no greater than 300 nanometers, no greater than 200 nanometers, no greater than 100 nanometers, not greater then 80 nanometers, no greater than 60 nanometers, no greater than 50 nanometers, no greater than 40 nanometers, no greater than 30 nanometers, no greater than 20 nanometers, no greater than 10 nanometers, no greater than 5 nanometers, or no greater than I nanometer. The particulate antistatic agent can have an average particle size that is at least 90 micrometers, at least 80 micrometers, at least 60 micrometers, at least 40 micrometers, at least 20 micrometers, at least 10 micrometers, at least 5 micrometers, at least 2 micrometers, at least 1 micrometer, at least 900 nanometers, at least 800 nanometers, at least 700 nanometers, at least 600 nanometers, at least 500 nanometers, at least 400 nanometers, at least 300 nanometers, at least 200 nanometers, at least 100 nanometers, less than 80 nanometers, at least 60 nanometers, at least 50 nanometers, at least 40 nanometers, at least 30 nanometers, at least 20 nanometers, at least 10 nanometers, at least 5 nanometers, or at least 1 nanometer. In this context, the term "average particle size" refers to the average size of single particles of particulate antistatic agent or, alternatively, a cluster or aggregate of particulate antistatic agent

The composition can comprise sufficient antistatic agent so that a static charge in, through, or on the composition is prevented, dissipated, or removed. In some embodiments (including some embodiments in which the antistatic agent comprises a salt), a static charge in, through, or on a composition can be prevented, dissipated, or removed when the composition comprises a plasticizer, a tackifier, or both a plasticizer and a tackifier. In some embodiments in which the antistatic agent comprises a salt, a static charge in, through, or on a composition can be prevented, dissipated, or removed when the composition is free of a plasticizer, free of a tackifier, or free of both a plasticizer and a tackifier. In some embodiments, the composition comprises sufficient antistatic agent so that the composition is an antistatic pressure sensitive adhesive having a surface resistivity of no greater than 10¹⁴ ohms per square (as measured, for example, according to the method of ASTM D257-07). In some embodiments, the composition is an antistatic pressure sensitive adhesive having a surface resistivity of no greater than 10¹³ ohms per square, no greater than 10¹² ohms per square, no greater than 10¹¹ ohms per square, no greater than 10¹⁰ ohms per square, no greater than 10⁹ ohms per square, no greater than 10⁸ ohms per square, no greater than 10⁷ ohms per square, or no greater than 10⁶ ohms per square (as measured, for example, according to the method of ASTM D257-07). In other embodiments, the composition comprises sufficient antistatic agent so that the composition is an antistatic pressure sensitive adhesive having a surface resistivity of at least 10⁶ ohms per square, at least 10⁷ ohms per square, at least 10⁸ ohms per square, at least 10⁹ ohms per square, at least 10¹⁰ ohms per square, at least 10¹¹ ohms per square, at least 10¹² ohms per square, or at least 10¹³ ohms per square (as measured, for example, according to the method of ASTM D257-07).

The composition can comprise no greater than 300 phr, no greater than 250 phr, no greater than 200 phr, no greater than 150 phr, no greater than 100 phr, no greater than 50 phr, no greater than 40 phr, no greater than 30 phr, no greater than 20 phr, no greater than 10 phr, no greater than 5 phr, no greater than 2 phr, no greater than 1 phr, no greater than 0.5 phr, or no greater than 0.1 phr of the antistatic agent. The composition can comprise at least 300 phr, at least 250 phr, at least 200 phr, at least 150 phr, at least 100 phr, at least 50 phr, at least 40 phr, at least 30 phr, at least 20 phr, at least 10 phr, at least 5 phr, at least 2 phr, at least 1 phr, at least 0.5 phr, or at least 0.1 phr of the antistatic agent. When the antistatic agent is a salt, the composition can comprise no greater than 25 phr, no greater than 20 phr, no greater than 15 phr, no greater than 10 phr, no greater than 5 phr, no greater than 4 phr, no greater than 3 phr, no greater than 2 phr, no greater than 1 phr, or no greater than 0.5 phr of a salt.

The composition has a peel strength (a measure of the force applied to remove (peel) a backing or sheet material coated with the composition from a test panel at 180° peel angle). That is, the coating of the composition is between the backing or sheet material and the test panel. The composition is initially adhered to both the backing and the test panel. The composition can have a peel strength, determined using the test described herein below, of at least 1 Newton per decimeter (N/dm), at least 2 N/dm, at least 3 N/dm, at least 5 N/dm, at least 7 N/dm, at least 10 N/dm, at least 12 N/dm, at least 15 N/dm, at least 18 N/dm, at least 20 N/dm, at least 22 N/dm, at least 24 N/dm, at least 26 N/dm, at least 28 N/dm, at least 30 N/dm, at least 32 N/dm, at least 34 N/dm, at least 36 N/dm, at least 38 N/dm, at least 40 N/dm, at least 50 N/dm, at least 60 N/dm, at least 70 N/dm, at least 80 N/dm, at least 90 N/dm, at least 100 N/dm,. In other embodiments, the composition has a peel strength of no greater than 100 N/dm, no greater than 90 N/dm, not greater then 80 N/dm, no greater than 70 N/dm, no greater than 60 N/dm, no greater than 50 N/dm, no greater than 40 N/dm, not greater then 38 N/dm, not greater then 36 N/dm, not greater then 34 N/dm, not greater then 32 N/dm, not greater then 30 N/dm, not greater then 28 N/dm, not greater then 26 N/dm, not greater then 24 N/dm, not greater then 22 N/dm, not greater then 20 N/dm, not greater then 18 N/dm, not greater then 16 N/dm, not greater then 14 N/dm, not greater then 12 N/dm, not greater then 10 N/dm, not greater then 8 N/dm, not greater then 6 N/dm, not greater then 4 N/dm, or not greater then 2 N/dm.

The composition has a shear strength (a measure of the cohesive strength of the composition, reported as the time for a sample adhered to a test panel to separate from the test panel under the stress of a constant load). The composition can have a shear strength, determined using the test described herein below, of at least 200 minutes, at least 400 minutes, at least 600 minutes, at least 800 minutes, at least 1,000 minutes, at least 1,400 minutes, at least 1,800 minutes, at least 2,000 minutes, at least 2,500 minutes, at least 3,000 minutes, at least 3,500 minutes, at least 4,000 minutes, at least 4,500 minutes, at least 5,000 minutes, at least 5,500 minutes, at least 6,000 minutes, at least 6,500 minutes, at least 7,000 minutes, at least 7,500 minutes, at least 8,000 minutes, at least 8,500 minutes, at least 9,000 minutes, at least 9,500 minutes, or at least 10,000 minutes. The composition can have a shear strength, determined using the test described herein below, of no greater than 10,000 minutes, no greater than 9,500 minutes, no greater than 9,000 minutes, no greater than 8,500 minutes, no greater than 8,000 minutes, no greater than 7,500 minutes, no greater than 7,000 minutes, no greater than 6,500 minutes, no greater than 6,000 minutes, no greater than 5,500 minutes, no greater than 5,000 minutes, no greater than 4,500 minutes, no greater than 4,000 minutes, no greater than 3,500 minutes, no greater than 3,000 minutes, no greater than 2,500 minutes, no greater than 2,000 minutes, no greater than 1,500 minutes, no greater than 1,000 minutes, no greater than 800 minutes, no greater than 600 minutes, no greater than 400 minutes, no greater than 200 minutes, or no greater than 100 minutes.

An article can comprise, in addition to the compositions described herein, a substrate having a first surface wherein the composition is adjacent the first surface. The article can comprise one substrate or more than one substrate (e.g., a first substrate or both a first substrate and a second substrate). Each substrate can independently have a first surface. Each substrate can independently have a second surface. The first and second substrates can be the same or different. The composition can be adjacent (i.e., in contact with, near, or separated by a layer from) a substrate, e.g., adjacent the first substrate. In some embodiments, the composition comprises an optically clear antistatic pressure sensitive adhesive. In some embodiments, the substrate is a backing. The backing can be flexible or rigid. The backing can comprise, for example, paper or a polymer. The polymer can comprise, for example, polyolefin or polyester. The article can be, for example, a tape, a label, or a protective article (e.g., protective tape or cover).

When the article further comprises a second substrate, the composition can be adjacent the second substrate. In some embodiments, the composition is adjacent the first substrate and the second substrate. The composition can be between the first substrate and the second substrate.

In some embodiments, the substrate is a release liner. The release liner can comprise a backing (e.g., paper or a polymer) having a release surface. The release liner can be flexible or rigid. When the article comprises a first substrate and a second substrate, both substrates can be release liners having the same or different release properties. In some embodiments, the release surface is a coating on one surface of a backing. In some embodiments, the release surface is a coating on two surfaces (e.g., opposite surfaces) of a backing. In embodiments having a release liner having two release surfaces, each surface can have the same or different release properties (i.e., the release liner can be a differential release liner wherein different forces are requires to release the antistatic pressure sensitive adhesive composition from each release surface). Such an article can be, for example, a transfer adhesive or a transfer tape and, in some embodiments, can be provided in roll form with the antistatic pressure sensitive adhesive between two release surfaces of a backing.

In some embodiments, the substrate is an optical element such as, for example, a polarizer, a brightness enhancing film, a diffuser film, or a transparent glass or polymeric component of an optical display device. In some embodiments, the substrate is a component of an optical display device (e.g., a component of a liquid crystal display (LCD), such as LCD glass). The substrate can be an electronic component, an electronic device, or a component of an electronic device such as a rigid or flexible printed circuit board, a hard disk drive, a wire, a cable, a wire or cable connector, a keypad, a case or housing, or a touch-sensitive display.

The article can be a multilayered article. The article can comprise more than one layer of a composition, more than one layer of a substrate, or independently more than one layer of both. For example, the article can comprise a first and second layer of the composition, each adjacent a polarizing layer and each adjacent a first and second substrate (e.g., a top and bottom glass panel of an LCD display), the first and second substrate each adjacent a layer of liquid crystalline material. In another embodiment, the article can be a multilayered article comprising a first layer of a composition adjacent a backing (the backing in the form of a protective sheet) and adjacent a polarizing layer which is adjacent a second layer of a composition (the compositions can be the same or different) which is adjacent a release liner.

The composition can be applied to a substrate by, for example, coating a solution of the composition onto a substrate, or extruding the composition onto a substrate. A solution of the composition can comprise any solvent for at least the first and, if present, the second block copolymer of the composition. In embodiments where the composition comprises a salt, a solution of the composition can comprise a solvent for the salt. In some embodiments, the solvent for the first (and, if present the second) block copolymer and the solvent for the salt are the same solvent.

A solution of the composition can comprise no greater than 60 weight percent of the first (and, if present, the second) block copolymer. A solution of the composition can comprise no greater than 50 weight percent, no greater than 40 weight percent, no greater than 30 weight percent, no greater than 20 weight percent, no greater than 15 weight percent, no greater than 10 weight percent, or no greater than 5 weight percent of the first (and, if present, the second) block copolymer. A solution of the composition can comprise at least 4 weight percent, at least 5 weight percent, at least 10 weight percent, at least 20 weight percent, at least 30 weight percent, at least 40 weight percent, or at least 45 weight percent of the first (and, if present, the second) block copolymer. Advantageously, a coating solution of the composition (e.g., a solution that has a viscosity suitable for coating) can comprise a higher proportion of the first (and, if present, the second) block copolymer than a solution of a linear, random copolymer adhesive.

### Examples

Unless otherwise noted, reagents and solvents were or can be obtained from Sigma-Aldrich Co., St. Louis, MO.

"Triblock 1" refers to a triblock copolymer having an A-B-A structure with poly (methyl methacrylate) hard block polymeric units (the A blocks), poly(n-butyl acrylate) soft block polymeric units (the B block), a weight average molecular weight of 66,400 grams per mole, and a polydispersity index of 1.11. Triblock 1 was 24 weight percent poly(methyl methacrylate). Triblock 1 was obtained under the designation LA2140e from Kuraray America, Inc., New York, NY.

"Triblock 2" refers to a triblock copolymer having an A-B-A structure with poly (methyl methacrylate) hard block polymeric units (the A blocks), poly(n-butyl acrylate) soft block polymeric units (the B block), a weight average molecular weight of 105,300 grams per mole, and a polydispersity index of 1.08. Triblock 2 was 24 weight percent poly(methyl methacrylate). Triblock 2 was obtained under the designation LA410L from Kuraray America, Inc., New York, NY.

"Triblock 3" refers to a triblock copolymer having an A-B-A structure with poly (methyl methacrylate) hard block polymeric units (the A blocks), poly(n-butyl acrylate) soft block polymeric units (the B block), a weight average molecular weight of 60,700 grams per mole, and a polydispersity index of 1.13. Triblock 3 was 33 weight percent poly(methyl methacrylate). Triblock 3 was obtained under the designation LA2250 from Kuraray America, Inc., New York, NY.

"Triblock 4" refers to a triblock copolymer having an A-B-A structure with poly (methyl methacrylate) hard block polymeric units (the A blocks), poly(2-ethylhexyl acrylate) soft block polymeric units (the B block), a weight average molecular weight of 83,200 grams per mole, and a polydispersity index of 1.11. Triblock 4 was 23 weight percent poly(methyl methacrylate). Triblock 4 was obtained under the designation 070821L from Kuraray America, Inc., New York, NY.

"Diblock" refers to a diblock copolymer having an A-B structure with a poly(methyl methacrylate) hard block polymeric unit (the A block), a poly(n-butyl acrylate) soft block polymeric unit (the B block), a weight average molecular weight of 59,500 grams per mole, and a polydispersity index of 1.18. Diblock was 7 weight percent poly(methyl methacrylate). Diblock was obtained under the designation LA1114 from Kuraray America, Inc., New York, NY.

"2-EHDPP" refers to 2-ethylhexyldiphenyl phosphate, available under the trade designation SANTICIZER 141 from Ferro Corp., Cleveland, OH.

"TBMA TFSI" refers to tributylmethylammonium bis(trifluoromethylsulfonyl)imide, prepared as described in U.S. Patent No. 6,372,829.

"EMI TFSI" refers to 1-ethyl-3-methylimidazolium bis(trifluoromethylsulfonyl)imide and can be obtained from Strem Chemicals, Inc., Newburyport, MA.

"LiTFSI" refers to lithium bis(trifluoromethylsulfonyl)imide.

"TBAHFP" refers to tetrabutylammonium hexafluorophosphate.

'CYASTAT" refers to N,N-bis(2-hydroxyethyl)-N-(3'-dodecyloxy-2'-hydroxypropyl) methyl ammonium sulfate, available under the trade designation CYASTAT 609 from Cytec Industries, Inc., West Paterson, NJ.

"ATO" refers to antimony tin oxide, available as a 30 weight percent dispersion of nanoparticles in isopropanol from Advanced Nano Products, Chungcheongbuck-do, Korea.

"PEDOT" refers to poly(3,4-ethylenedioxythiophene)/poly(styrenesulfonate), available as a 1.3 weight percent dispersion in water from Polysciences, Inc., Warrington, PA.

"DBOX" refers to dibutyl oxalate.

"PEO ETHER" refers to a poly(oxyethylene) ether available under the trade designation PYCAL 94 from ICI Americas, Inc., Wilmington, DE.

"KE 100" refers to a hydrogenated rosin ester available under the trade designation PINECRYSTAL KE-100 from Arakawa Chemical (USA), Chicago, IL.

"S520" refers to a phenol-modified copolymer of styrene and alpha-methylstyrene, available under the trade designation SYLVARES 520 from Arizona Chemical Co., Jacksonville, FL.

Surface resistivity of the compositions was measured according to ASTM D257-07 using a Model 8009 test apparatus (Keithly Instruments, Inc., Cleveland, OH). Each sample was stored at 23°C and 50% relative humidity for 24 hours before the surface resistivity was measured. The sample was placed between two electrodes and a potential of 500 volts was applied for one minute.

For the Shear Strength Test and the Peel Strength Test, compositions were coated onto primed optical-grade poly(ethylene terephalate) (PET) film (obtained under the trade designation HOSTAPHAN 3SAB from Mitsubishi Polyester Film, Inc., Greer, SC) as described in each Example.

### Shear Strength Test

The Shear Strength Test essentially followed the procedure of D257-07 except as noted. The tests were conducted at room temperature using samples of PET film that had been coated with the compositions and then applied to stainless steel panels such that one end portion of each sample was not adhered to the panel. The panel, with the composition-coated sample attached, was held in a rack such that the panel formed an angle of approximately 178° with the extended free end of the antistatic pressure sensitive adhesive-coated strip. A force of either 500 grams or 1,000 grams was applied to the free end of the coated sample. The time, in minutes, for each sample to separate from the panel was recorded as the shear strength. A sample that remained adhered to the panel for more than 10,000 minutes was recorded as having a shear value of ">10,000" minutes. The sizes of the samples of the coated PET were 0.127 decimeter by 0.254 decimeter (0.5 x 1.0 inch; used with a force of 500 grams; Procedure A), 0.127 decimeter by 0.127 decimeter (0.5 x 0.5 inch; used with a force of 1 kg; Procedure B), or 0.127 decimeter by 0.254 decimeter (0.5 x 1.0 inch; used with a force of 1 kg; Procedure C).

### Peel Strength Test

Tapes were analyzed using a Model 3M90 slip/peel tester, manufactured by Instrumentors, Inc., Strongsville, OH, according to the standard tape method AFERA (Association dé Fabricants Européens de Rubans Auto-Adhésifs) 4001. In the Examples, peel adhesion force is expressed in Newtons/decimeter width (N/dm) of the coated sheet. Peel adhesion forces were measured after 15 to 20 minutes dwell time.

A strip (2.54 centimeter wide) of the antistatic pressure sensitive adhesive-coated PET (described above) was applied to the horizontal surface of a clean LCD glass test plate with at least 12.7 lineal centimeter of both surfaces in contact, and keeping a short portion of the sample (the "free end") from contacting the glass. A 2-kilogram hard rubber roller was used to press the sample onto the LCD glass. The free end of the sample was pulled back to form a nearly 180° angle with the portion of the sample that was adhered to the glass. The free end was attached to the adhesion tester scale. The LCD glass test plate was clamped in the jaws of a tensile testing machine that was capable of moving the plate away from the scale at a constant rate of 30.5 centimeters/minute (12 inches/minute). Data for each Example was collected in three measurements from three samples of each Example. The data was reported as the average of the results of the measurements of each sample.

### Examples 1-5

Preparation and Properties of Antistatic Pressure Sensitive Adhesives

Pellets of Triblock 1 were dissolved in solvent, to provide solutions each having a concentration of 40 weight percent, in jars on a roller mill at room temperature overnight. In Example 1, the solvent was 10 weight percent toluene in ethyl acetate. In Examples 2-5, the solvent was 30 weight percent isopropanol in toluene. In Examples 2-5, pellets of Triblock 1 were rinsed (by soaking and shaking them in ajar with isopropanol) before they were dissolved in the solvent. In Example 1, the rinsing step was not carried out. For each of Examples 1-5, diblock was dissolved (in the same solvent as Triblock 1) to provide solutions having a concentration of 40 weight percent. Weighed samples of each of the polymer solutions were combined to provide mixtures in which the weight ratio of Triblock 1 to Diblock (the weight ratio of the dry polymers) was 75:25. For each of Examples 1-5, a 25 weight percent solution of TBMA TFSI (in the same solvent as Triblock 1) was added to each solution to provide a composition having 5 phr of the salt based on the weight of the dry polymer. For Examples 3-5, a 50 weight percent solution of 2-EHDPP (in the same solvent as Triblock 1) was added to each mixture to provide compositions having 5 phr, 10 phr, and 15 phr, respectively, of 2-EHDPP based on the weight of dry polymer. Each polymer mixture was coated onto PET film at a wet coating thickness of 0.114 millimeter (0.0045 inch). Each coated sample was dried in a forced air oven at approximately 70°C. The thickness of the dry composition on each PET film was approximately 0.0254 millimeter (0.001 inch). Each sample was stored for at least 18 hours at a temperature of 23°C and 50% relative humidity. The peel strength and surface resistivity were determined as described above. For Example 1, Shear Strength Test Procedure A was used. For Example 2, Shear Strength Test Procedure B was used. For Examples 3-5, Shear Strength Test Procedure C was used. The peel strength, shear strength, and surface resistivity data are given in Table 1. The optical properties (transmittance, haze, and the L*a*b* color spaces) of the composition of Example 5 were determined in accordance with CIE standards using a Model 8870 TCS Plus spectrophotometer (manufactured by BYK-Gardner USA, Columbia, MD). Additionally, the optical properties of uncoated PET film were determined as a control. The optical properties data are given in Table 2.

**Table 1. Data for Example 1-5.**

| Example | 2-EHDPP Concentration (phr) | Peel (N/dm) | Shear (minutes) | Surface Resistivity (ohms per square) |
|---|---|---|---|---|
| 1 | 0 | 23 | >10,000 | 3.5x10¹¹ |
| 2 | 0 | 18 | >10,000 | 4.7x10¹¹ |
| 3 | 5 | 10 | >10,000 | 2.4x10¹¹ |
| 4 | 10 | 3 | >10,000 | 6.2x10¹⁰ |
| 5 | 15 | 2 | 1,700 | 3.2x10¹⁰ |

**Table 2. Optical Properties of the Composition of Example 5 and Control PET Film**

| Example | L* | a* | b* | Transmittance | Haze C2° | Haze A2° |
|---|---|---|---|---|---|---|
| 5 | 95.3 | 0.05 | 1.25 | 88.1% | 2.3% | 2.2% |
| Control (PET) | 94.7 | 0.03 | 1.32 | 86.5% | 3.1% | 3.0% |

### Examples 6-9

Pellets of Triblock 2 were dissolved in 10 weight percent toluene in ethyl acetate, to provide solutions each having a concentration of 40 weight percent, in jars on a roller mill at room temperature overnight. For each of Examples 7-9, Diblock was dissolved (in the same solvent as Triblock 2) to provide solutions having a concentration of 40 weight percent, and weighed samples of each of the polymer solutions were combined to provide mixtures in which the weight ratio of Triblock 2 to Diblock (the weight ratio of the dry polymers) was as shown in Table 3. A 25 weight percent solution of TBMA TFS1 in 10 weight percent toluene in ethyl acetate was added to each solution to provide a composition having 5 phr of the salt based on the weight of the dry polymer. Each polymer mixture was coated onto PET film at a wet coating thickness of 0.114 millimeter (0.0045 inch). Each coated sample was dried in a forced air oven at approximately 70°C. The thickness of the dry composition on each PET film was approximately 0.0254 millimeter (0.001 inch). Each sample was stored for at least 18 hours at a temperature of 23°C and 50% relative humidity. The peel strength, shear strength, and surface resistivity were determined as described above. For Examples 6-9, Shear Strength Test Procdure A was used. The data are given in Table 3. In Table 3, "Ratio" means the weight ratio of Triblock 2 to Diblock.

**Table 3. Data for Examples 6-9.**

| Example | Ratio | Peel (N/dm) | Shear (minutes) | Surface Resistivity (ohms per square) |
|---|---|---|---|---|
| 6 | 100/0 | 24 | >10,000 | 5.7x10¹¹ |
| 7 | 75/25 | 23 | >10,000 | 2.8x10¹¹ |
| 8 | 50/50 | 13 | >10,000 | 1.7x10¹¹ |
| 9 | 25/75 | 7 | 2,600 | 6.6x10¹⁰ |

### Example 10

Pellets of Triblock 2 were rinsed with 10 weight percent toluene in ethyl acetate and were then used to prepare a solution according to the procedure essentially as described in Example 7. The solution of the 75/25 Triblock 2/Diblock polymer mixture was coated onto optical grade PET film and the coating was dried in a forced air oven at approximately 70°C. The thickness of the dry composition on the release liner was approximately 0.025 millimeter (0.001 inch). The optical properties (transmittance, haze, and the L*a*b* color spaces) were determined in accordance with CIE standards using a Model 8870 TCS Plus spectrophotometer (manufactured by BYK-Gardner USA, Columbia, MD). Additionally, the optical properties of uncoated PET film were determined as a control. The data are given in Table 4.

**Table 4. Optical Properties of the Composition of Example 10 and Control PET Film**

| Example | L* | a* | b* | Transmittance | Haze C2° | Haze A2° |
|---|---|---|---|---|---|---|
| 10 | 97.1 | 0.03 | 0.15 | 92.5% | 2.5% | 2.5% |
| Control (PET) | 96.9 | 0.03 | 0.14 | 92.2% | 2.6% | 2.6% |

### Example 11

Pellets of Triblock 2 were rinsed with isopropanol before they were dissolved in 30 weight percent isopropanol in toluene, to provide a solution having a concentration of 40 weight percent, in a jar on a roller mill at room temperature overnight. Diblock was dissolved in the same solvent to provide a solution having a concentration of 40 weight percent. Weighed samples of each of the polymer solutions were combined to provide a mixture in which the weight ratio of Triblock 2 to Diblock (the weight ratio of the dry polymers) was 75:25. A 25 weight percent solution of TBMA TFSI in 30 weight percent isopropanol in toluene was added to the solution to provide a composition having 5 phr of the salt based on the weight of the dry polymer. The polymer mixture was coated onto PET film, and the coating was dried, stored, and tested as described above. The sample had a peel strength value of 24 Newtons per decimeter, a shear strength value (Procedure C) of >10,000 minutes, and a surface resistivity of 4x10¹¹ ohms per square.

### Example 12

Pellets of Triblock 1 were rinsed with isopropanol (as described in Examples 2-5) before they were dissolved in methyl ethyl ketone, to provide a solution having a concentration of 40 weight percent, in ajar on a roller mill at room temperature overnight. Diblock was dissolved in MEK to provide a solution having a concentration of 40 weight percent. Weighed samples of each of the polymer solutions were combined to provide a mixture in which the weight ratio of Triblock 1 to Diblock (the weight ratio of the dry polymers) was 75:25. A 25 weight percent solution of EMI TFSI in methyl ethyl ketone was added to the solution to provide a composition having 5 phr of the salt based on the weight of the dry polymer. The polymer mixture was coated onto PET film, and the coating was dried, stored, and tested as described above. The sample had a peel strength value of 11 Newtons per decimeter, a shear strength value (Procedure C) of >10,000 minutes, and a surface resistivity of 6.1x10¹¹ ohms per square.

### Example 13

Pellets of Triblock 1 were rinsed with isopropanol before they were dissolved in methyl ethyl ketone, to provide a solution having a concentration of 40 weight percent, in ajar on a roller mill at room temperature overnight. Diblock was dissolved in the same solvent to provide a solution having a concentration of 40 weight percent. Weighed samples of each of the polymer solutions were combined to provide a mixture in which the weight ratio of Triblock 1 to Diblock (the weight ratio of the dry polymers) was 75:25. A 25 weight percent solution of LiTFSI in methyl ethyl ketone was added to the solution to provide a composition having 5 phr of the salt based on the weight of the dry polymer. The polymer mixture was coated onto PET film, and the coating was dried, stored, and tested as described above. The sample had a peel strength value of 4 Newtons per decimeter, a shear strength value (Procedure C) of >10,000 minutes, and a surface resistivity of 2.6x10¹⁰ ohms per square.

The optical properties (transmittance, haze, and the L*a*b* color spaces) were determined in accordance with CIE standards using a Model 8870 TCS Plus spectrophotometer (manufactured by BYK-Gardner USA, Columbia, MD). Additionally, the optical properties of uncoated PET film were determined as a control. The data are given in Table 5.

**Table 5. Optical Properties of the Composition of Example 13 and Control PET Film**

| Example | L* | a* | b* | Transmittance | Haze C2° | Haze A2° |
|---|---|---|---|---|---|---|
| 13 | 95.4 | 0.05 | 1.19 | 88.4% | 1.9% | 1.8% |
| Control (PET) | 94.7 | 0.02 | 1.26 | 86.7% | 3.0% | 2.8% |

### Example 14

The preparation of the polymer solution of Example 14, and the coating and testing, were carried out essentially as described in Example 13, except that sufficient 50 weight percent DBOX in MEK was added to the polymer solution to provide a composition having 5 phr DBOX based on dry polymer. The sample had a peel strength value of 12 Newtons per decimeter, a shear strength value (Proecedure C) of >10,000 minutes, and a surface resistivity of 4.1x10¹⁰ ohms per square.

### Examples 15-18

For each of Examples 15-18, pellets of Triblock 1 were rinsed (as described above) with isopropanol before they were dissolved in methyl ethyl ketone, to provide solutions each having a concentration of 40 weight percent, in jars on a roller mill at room temperature overnight. Diblock was dissolved in MEK to provide a solution having a concentration of 40 weight percent. Weighed samples of each of the polymer solutions were combined to provide a mixture in which the weight ratio of Triblock 1 to Diblock (the weight ratio of the dry polymers) was 75:25. Portions of a 25 weight percent solution of LiClO₄ in methyl ethyl ketone was added to each solution to provide compositions having 5 phr of the salt based on the weight of the dry polymer. Portions of a 50 weight percent solution of PEO ETHER in MEK were added to each of the compositions of Examples 16-18 to provide compositions having 5 phr, 10 phr, and 15 phr PEO ETHER, respectively, based on the total weight of the dry polymer. The solution of PEO ETHER was not added to the composition of Example 15. Each polymer mixture was coated onto PET film, and the coating was dried, stored, and tested as described above. The Shear Strength Test was carried out using Procedure C. The data are given in Table 6. In Table 6, "n/a" means that the data was not obtained.

**Table 6. Data for Examples 15-18.**

| Example | Peel (N/dm) | Shear (minutes) | Surface Resistivity (ohms per square) |
|---|---|---|---|
| 15 | 1 | >10,000 | 1x10¹³ |
| 16 | 2 | 2800 | 4.2 x10¹¹ |
| 17 | n/a | 500 | 1.5x10¹⁰ |
| 18 | n/a | 400 | 6.8x10⁹ |

### Example 19

Pellets of Triblock 1 (4.5 g) were dissolved in the dispersion of ATO in isopropanol (10 g) in ajar on a roller mill to provide a solution of Triblock 1 in the dispersion. Diblock was dissolved in 30 weight percent isopropanol in toluene, to provide a solution having a Diblock concentration of 40 weight percent. Portions of each polymer mixture were combined to provide a mixture having a dry polymer weight ratio of 75:25 and having 50 phr ATO nanoparticles (based on the total weight of dry polymer). The components were mixed using roller mill at room temperature overnight. A 50 weight percent solution of 2-EHDPP in methyl ethyl ketone was added to the mixture to provide a composition having 5 phr 2-EHDPP based on the total weight of the dry polymer. The polymer mixture was coated onto PET film, and the coating was dried, stored, and tested as described above. The sample had a peel strength value of 7 Newtons per decimeter, a shear strength value (Procedure C) of >10,000 minutes, and a surface resistivity of 4.9x10¹³ ohms per square.

### Examples 20-21

For each of Examples 20-21, pellets of Triblock 1 were rinsed with isopropanol (as described above) before they were dissolved in methyl ethyl ketone, to provide solutions each having a concentration of 40 weight percent, in jars on a roller mill at room temperature overnight. Diblock was dissolved in MEK to provide a solution having a concentration of 40 weight percent. Weighed samples of each of the polymer solutions were combined to provide a mixture in which the weight ratio of Triblock 1 to Diblock (the weight ratio of the dry polymers) was 75:25. Portions of a 25 weight percent solution of TBAHFP in methyl ethyl ketone was added to each solution to provide compositions having 5 phr of the salt based on the weight of the dry polymer. Portions of a 50 weight percent solution of 2-EHDPP in MEK were added to each of the compositions of Examples 20 and 21 to provide compositions having 5 phr and 10 phr 2-EHDPP, respectively, based on the weight of dry polymer. Each polymer mixture was coated onto PET film, and the coating was dried, stored, and tested as described above. The data are given in Table 7.

**Table 7. Data for Examples 20-21.**

| Example | Peel (N/dm) | Shear (minutes) | Surface Resistivity (ohms per square) |
|---|---|---|---|
| 20 | 4 | >10,000 | 8.9 x10¹² |
| 21 | 4 | 6,000 | 2.9 x10¹² |

### Example 22

The preparation of the polymer solution of Example 22, and the coating and testing, were carried out essentially as described in Example 20, except that a 12.5 weight percent solution of sodium iodide in methyl ethyl ketone was used in place of the TBAHFP solution to provide a composition having 5 phr of sodium iodide based on the total weight of the dry polymers. The sample had a peel strength value of 1 N/dm, a shear strength value (Procedure C) of 800 minutes, and a surface resistivity of 4.3x10¹¹ ohms per square.

### Example 23

The preparation of the polymer solution of Example 23, and the coating and testing, were carried out essentially as described in Example 15, except that a 50 weight percent solution of CYASTAT in isopropanol was substituted for the LiClO₄ solution to provide a composition having 5 phr CYASTAT, based on the weight of the dry polymer. The sample had a peel value of 0.3 Newton per decimeter and a surface resistivity of 1.8x10¹² ohms per square. The shear value was not measured.

### Example 24

A PEDOT aqueous dispersion (50 mL) was extracted with chloroform (50 mL) using cetylpyridinium chloride (1.0 g). To a 10 gram sample of the chloroform dispersion of PEDOT there was added pellets of Triblock 1 (1.5 g) and 1.25 g of a 40 weight percent solution of Diblock in methyl ethyl ketone. The mixture had a 75:25 weight ratio of Triblock to Diblock, and 5 phr PEDOT based on the total polymer dry weight. A sufficient amount of a 50 weight percent solution of 2-EHDPP in methyl ethyl ketone was then added to the mixture to provide a mixture that had 5 phr 2-EHDPP based on the total polymer dry weight. The coating and testing was carried out essentially as described above except that the thickness of the dry composition on PET film was approximately 0.0381 mm (0.0015 inch). The sample had a peel strength value of 2 N/dm, and a surface resistivity of 7.1 x10⁹ ohms per square. The shear strength value (Procedure A) was >10,000 minutes.

### Example 25

Pellets of Triblock 2 were rinsed with isopropanol. Separate 40 weight percent solutions of Triblock 2 and Diblock in a mixture of 30 weight percent isopropanol in toluene were prepared. The solutions were combined to provide a solution having 50 parts by dry weight Triblock 2 and 20 parts by dry weight Diblock. To this solution there were added solutions of 25 weight percent TBMA TFSI and 50 weight percent KE 100 (each in a mixture of 30 weight percent isopropanol in toluene) to provide a composition having 30 weight percent KE 100 (and 5 phr TBMA TFSI). In this Example, the 5 phr TBMA TFSI was based on the mixture of Triblock 2 and Diblock. The polymer mixture was coated onto PET film, and the coating was dried, stored, and tested as described above. The sample had a peel strength value of 71 N/dm, a shear strength value (Procedure C) of >10,000 minutes, and a surface resistivity of 3.1x10¹³ ohms per square.

The optical properties (transmittance, haze, and the L*a*b* color spaces were determined in accordance with CIE standards using a Model 8870 TCS Plus spectrophotometer (manufactured by BYK-Gardner USA, Columbia, MD). A solution of composition in organic solvent was coated onto a silicone-coated release liner and was then dried to provide a dry coating having a thickness of 25 micrometers (0.001 inch). The composition was transferred to a glass microscope slide having dimensions of 75 millimeters by 50 millimeters by pressing the composition onto the slide and applying pressure with a rubber roller. The release liner was then removed to provide the composition on the glass microscope slide. The results (obtained using a clean glass microscope slide as a reference) were L* (100), a* (0.00), b* (0.05), transmittance (100%), C2° (0.4%), and A2° (0.4%).

### Example 26

The preparation of the polymer solution of Example 26, and the coating and testing, were carried out essentially as described in Example 25, except that S520 was substituted for KE 100. The sample had a peel strength value of 71 N/dm, a shear strength value (Procedure C) of >10,000 minutes, and a surface resistivity of 5.7x10¹³ ohms per square.

### Example 27

Pellets of Triblock 2 were rinsed with isopropanol. A 40 weight percent solutions of Triblock 2 in a mixture of 30 weight percent isopropanol in toluene was prepared. To this solution there were added sufficient amounts of solutions of 50 weight percent 2-EHDPP and 50 weight percent KE 100 (each in a mixture of 30 weight percent isopropanol in toluene) to provide a composition having 48 weight percent Triblock 2, 8 weight percent 2-EHDPP, and 44 weight percent KE 100 based on the total weight of the dry composition. To this solution there was added a sufficient amount of a solution of 25 weight percent TBMA TFSI to provide a composition having 5 phr TBMA TFSI based on the weight of the dry polymer. The polymer mixture was coated onto PET film, and the coating was dried, stored, and tested as described above. The sample had a peel strength value of 81 N/dm, a shear strength value (Procedure B) of >10,000 minutes, and a surface resistivity of 4.2x10¹³ ohms per square.

### Example 28

The preparation of the polymer solution of Example 28, and the coating and testing, were carried out essentially as described in Example 27, except that S520 was substituted for KE 100. The sample had a peel strength value of 84 N/dm, a shear strength value (Procedure C) of >10,000 minutes, and a surface resistivity of 9.1x10¹³ ohms per square.

The optical properties (transmittance, haze, and the L*a*b* color spaces were determined in accordance with CIE standards using a Model 8870 TCS Plus spectrophotometer (manufactured by BYK-Gardner USA, Columbia, MD). A solution of composition in organic solvent was coated onto a silicone-coated release liner and was then dried to provide a dry coating having a thickness of 25 micrometers (0.001 inch). The composition was transferred to a glass microscope slide having dimensions of 75 millimeters by 50 millimeters by pressing the composition onto the slide and applying pressure with a rubber roller. The release liner was then removed to provide the composition on the glass microscope slide. The results (obtained using a clean glass microscope slide as a reference) were L* (99.83), a* (0.00), b* (0.10), transmittance (99.5%), C2° (0.9%), and A2° (0,8%)

### Example 29

Pellets of Triblock 1 were rinsed with isopropanol. A 40 weight percent solutions ofTriblock 1 in a mixture of 30 weight percent isopropanol in toluene was prepared. To this solution there were added sufficient amounts of solutions of 50 weight percent 2-EHDPP and 50 weight percent KE 100 (each in a mixture of 30 weight percent isopropanol in toluene) to provide a composition having 65.3 weight percent Triblock 1, 5.9 weight percent 2-EHDPP, and 28.8 weight percent KE 100, based on the total weight of the dry composition. To this solution there was added a sufficient amount of a solution of 25 weight percent TBMA TFSI to provide a composition having 5 phr TBMA TFSI based on the combined weights of Triblock 1, 2-EHDPP, and KE 100. The polymer mixture was coated onto PET film, and the coating was dried, stored, and tested as described above. The sample had a peel strength value of 48 N/dm, a shear strength value (Procedure B) of >10,000 minutes, and a surface resistivity of 1.1x10¹³ ohms per square.

### Example 30

Pellets of Triblock 3 were rinsed with isopropanol. Separate 40 weight percent solutions of Triblock 3 and Diblock in a mixture of 30 weight percent isopropanol in toluene were prepared. The solutions were combined to provide a solution having 75 parts by dry weight Triblock 2 and 25 parts by dry weight Diblock. To this solution there was added a solution of 25 weight percent TBMA TFSI in a mixture of 30 weight percent isopropanol in toluene to provide a composition having 5 phr TBMA TFSI based on the weight of the dry polymer. The polymer mixture was coated onto PET film, and the coating was dried, stored, and tested as described above. The sample had a peel strength value of 4 N/dm, a shear strength value (Procedure C) of >10,000 minutes, and a surface resistivity of 1.7x10¹² ohms per square.

### Example 31

Triblock 4 was dissolved in methyl ethyl ketone to provide a solution having a concentration of 40 weight percent, in ajar on a roller mill at room temperature overnight. Diblock was dissolved in methyl ethyl ketone to provide a solution having a Diblock concentration of 40 weight percent. Portions of each polymer mixture were combined to provide a mixture having a dry polymer weight ratio of 75:25. A 50 weight percent solution of 2-EHDPP in methyl ethyl ketone was added to the mixture to provide a composition having 5 phr 2-EHDPP based on the weight of the dry polymer. A 25 weight percent solution of TBMA TFSI in 10 weight percent toluene in ethyl acetate was added to the solution to provide a composition having 5 phr of the salt based on the weight of the dry polymer. The polymer mixture was coated onto PET film, and the coating was dried, stored, and tested as described above. The sample had a peel strength value of 0.4 N/dm and a surface resistivity of 5.7x10¹² ohms per square. The shear strength was not measured.

It should be understood that this invention is not intended to be unduly limited by the illustrative embodiments and examples. The example and embodiments are presented by way of example only with the scope of the invention intended to be limited only by the claims set forth herein as follows.

## Claims

1. A composition comprising:
a) an antistatic agent that is dissolved, dispersed, or suspended within the composition, the antistatic agent being selected from a group consisting of a salt, a metal, an electrically conductive metal oxide, and a combination thereof, wherein the electrically conductive metal oxide is a mixed metal oxide or is selected from the group consisting of oxides of tin, indium, silver, vanadium, cobalt, iron, and molybdenum and wherein salts have an anion selected from the group consisting of a halide, perchlorate, nitrate, tetrafluoroborate, hexafluorostannate, hexafluorophosphate, hexafluoroantimonate, methanesulfonate, trifluoromethanesulfonate, acetate, trifluoroacetate, benzoate, pentafluorobenzoate, 4-trifluoromethylbenzoate, benzenesulfonate, toluenesulfonate, 4-(trifluoromethyl)benzenesulfonate, bis(trifluoromethylsulfonyl)imide, bis(pentafluoroethylsulfonyl)imide, and tris(trifluoromethylsulfonyl)methide; and
b) a first block copolymer comprising
i) at least two hard A block polymeric units each independently having a T_{g} of at least 50°C; and
ii) at least one soft B block (meth)acrylic polymeric unit having a T_{g} no greater than 20°C,
wherein the first block copolymer comprises a total of 10 weight percent to 60 weight percent of the hard A block polymeric units, and wherein the composition is an antistatic pressure sensitive adhesive.

2. The composition of claim 1 wherein the composition is an optically clear antistatic pressure sensitive adhesive having a luminous transmittance in a range of 400 to 700 nanometers for a sample of the composition having a thickness of 25 micrometers of at least 90% when measured with a spectrophotometer using the method of ASTM D1003-07.

3. The composition of claim 1 wherein the salt comprises a fluorinated anion.

4. The composition of any one of claims 1-3 wherein at least one of the hard A block polymeric units is prepared from reactants comprising an alkyl (meth)acrylate monomer.

5. The composition of any one of claims 1-4 further comprising a second block copolymer comprising at least one hard C block polymeric unit having a T_{g} of at least 50°C, and at least one soft D block polymeric unit having a T_{g} of no greater than 20°C.

6. The composition of any one of claims 1-5 wherein the antistatic agent comprises a salt and the composition comprises no greater than 15 phr antistatic agent.

7. The composition of any one of claims 1-5 wherein the antistatic agent comprises an electrically conductive metal oxide and the composition comprises no greater than 100 phr antistatic agent.

8. A composition comprising:
a) an antistatic agent that is dissolved, dispersed, or suspended within the composition, the antistatic agent being selected from a group consisting of a salt, a metal, an electrically conductive metal oxide, and a combination thereof, wherein the electrically conductive metal oxide is a mixed metal oxide or is selected from the group consisting of oxides of tin, indium, silver, vanadium, cobalt, iron, and molybdenum and wherein salts have an anion selected from the group consisting of a halide, perchlorate, nitrate, tetrafluoroborate, hexafluorostannate, hexafluorophosphate, hexafluoroantimonate, methanesulfonate, trifluoromethanesulfonate, acetate, trifluoroacetate, benzoate, pentafluorobenzoate, 4-trifluoromethylbenzoate, benzenesulfonate, toluenesulfonate, 4-(trifluoromethyl)benzenesulfonate, bis(trifluoromethylsulfonyl)imide, bis(pentafluoroethylsulfonyl)imide, and tris(trifluoromethylsulfonyl)methide; and
b) a first block copolymer comprising
i) at least two hard A block polymeric units each independently prepared from reactants comprising methyl methacrylate and each independently having a T_{g} of at least 50°C; and
ii) at least one soft B block (meth)acrylic polymeric unit having a T_{g} no greater than 20°C and prepared from reactants comprising an alkyl acrylate,
wherein the first block copolymer comprises a total of 10 weight percent to 60 weight percent of the hard A block polymeric units, and wherein the composition is an antistatic pressure sensitive adhesive.

9. The composition of claim 8 wherein the composition is an optically clear antistatic pressure sensitive adhesive having a luminous transmittance in a range of 400 to 700 nanometers for a sample of the composition having a thickness of 25 micrometers of at least 90% when measured with a spectrophotometer using the method of ASTM D1003-07.

10. An article comprising:
a) a first substrate having a first surface; and
b) a composition comprising 1) an antistatic agent that is dissolved, dispersed, or suspended within the composition, the antistatic agent being selected from a group consisting of a salt, a metal, an electrically conductive metal oxide, and a combination thereof, wherein the electrically conductive metal oxide is a mixed metal oxide or is selected from the group consisting of oxides of tin, indium, silver, vanadium, cobalt, iron, and molybdenum and wherein salts have an anion selected from the group consisting of a halide, perchlorate, nitrate, tetrafluoroborate, hexafluorostannate, hexafluorophosphate, hexafluoroantimonate, methanesulfonate, trifluoromethanesulfonate, acetate, trifluoroacetate, benzoate, pentafluorobenzoate, 4-trifluoromethylbenzoate, benzenesulfonate, toluenesulfonate, 4-(trifluoromethyl)benzenesulfonate, bis(trifluoromethylsulfonyl)imide, bis(pentafluoroethylsulfonyl)imide, and tris(trifluoromethylsulfonyl)methide, and 2) a first block copolymer comprising
i) at least two hard A block polymeric units each independently having a T_{g} of at least 50°C; and
ii) at least one soft B block (meth)acrylic polymeric unit having a T_{g} no greater than 20°C;
wherein the first block copolymer comprises a total of 10 weight percent to 60 weight percent of the hard A block polymeric units, and wherein the composition is an antistatic pressure sensitive adhesive adjacent the first surface.

11. The article of claim 10 wherein the composition comprises an optically clear antistatic pressure sensitive adhesive having a luminous transmittance in a range of 400 to 700 nanometers for a sample of the composition having a thickness of 25 micrometers of at least 90% when measured with a spectrophotometer using the method of ASTM D1003-07.

12. The article of any one of claims 10-11 wherein the composition further comprises a second block copolymer comprising at least one hard C block polymeric unit having a T_{g} of at least 50°C, and at least one soft D block polymeric unit having a T_{g} of no greater than 20°C.

13. The article of claim 10 wherein the salt comprises a fluorinated anion.

14. The article of any one of claims 10-13 wherein the first substrate comprises a release liner, paper, glass, a polymer film, an optical film, an optical element, an optical display, or an electronic device.

15. The article of any one of claims 10-14 further comprising a second substrate.

## Patentansprüche

1. Eine Zusammensetzung, umfassend:
a) ein antistatisches Mittel, das in der Zusammensetzung gelöst, dispergiert oder suspendiert ist, wobei das antistatische Mittel ausgewählt ist aus der Gruppe bestehend aus einem Salz, einem Metall, einem elektrisch leitenden Metalloxid und einer Kombination davon, wobei das elektrisch leitende Metalloxid ein gemischtes Metalloxid ist oder ausgewählt ist aus der Gruppe bestehend aus Oxiden von Zinn, Indium, Silber, Vanadium, Kobalt, Eisen und Molybdän und wobei die Salze ein Anion aufweisen, das ausgewählt ist aus der Gruppe bestehend aus einem Halogenid, Perchlorat, Nitrat, Tetrafluoroborat, Hexafluorostannat, Hexafluorophosphat, Hexafluoroantimonat, Methansulfonat, Trifluormethansulfonat, Acetat, Trifluoracetat, Benzoat, Pentafluorbenzoat, 4-Trifluormethylbenzoat, Benzolsulfonat, Toluolsulfonat, 4- (Trifluormethyl)benzolsulfonat, Bis(trifluormethylsulfonyl)imid, Bis(pentafluorethylsulfonyl)imid und Tris(trifluormethylsulfonyl)methid; und
b) ein erstes Blockcopolymer, umfassend
i) mindestens zwei harte A-Block-Polymereinheiten, die jeweils unabhängig eine T_{g} von mindestens 50 °C aufweisen; und
ii) mindestens eine weiche B-Block-(Meth)acryl-polymereinheit mit einer T_{g} von nicht mehr als 20 °C,
wobei das erste Blockcopolymer zu insgesamt 10 Gewichtsprozent bis 60 Gewichtsprozent die harten A-Block-Polymereinheiten umfasst und wobei die Zusammensetzung ein antistatischer Haftkleber ist.

2. Die Zusammensetzung nach Anspruch 1, wobei die Zusammensetzung ein optisch klarer, antistatischer Haftkleber ist, der bei einer Probe der Zusammensetzung mit einer Dicke von 25 Mikrometern in einem Bereich von 400 bis 700 Nanometern eine Lichtdurchlässigket von mindestens 90 % bei Messung mit einem Spektralphotometer mittels des Verfahrens von ASTM D1003-07 aufweist.

3. Die Zusammensetzung nach Anspruch 1, wobei das Salz ein fluoriertes Anion umfasst.

4. Die Zusammensetzung nach einem der Ansprüche 1 bis 3, wobei mindestens eine der harten A-Block-Polymereinheiten aus Reaktionspartnern hergestellt ist, die ein Alkyl(meth)acrylat-Monomer umfassen.

5. Die Zusammensetzung nach einem der Ansprüche 1 bis 4, ferner umfassend ein zweites Blockcopolymer, das mindestens eine harte C-Block-Polymereinheit mit einer T_{g} von mindestens 50 °C und mindestens eine weiche D-Block-Polymereinheit mit einer T_{g} von nicht mehr als 20 °C umfasst.

6. Die Zusammensetzung nach einem der Ansprüche 1 bis 5, wobei das antistatische Mittel ein Salz umfasst und die Zusammensetzung nicht mehr als 15 phr antistatisches Mittel umfasst.

7. Die Zusammensetzung nach einem der Ansprüche 1 bis 5, wobei das antistatische Mittel ein elektrisch leitendes Metalloxid umfasst und die Zusammensetzung nicht mehr als 100 phr antistatisches Mittel umfasst.

8. Eine Zusammensetzung, umfassend:
a) ein antistatisches Mittel, das in der Zusammensetzung gelöst, dispergiert oder suspendiert ist, wobei das antistatische Mittel ausgewählt ist aus der Gruppe bestehend aus einem Salz, einem Metall, einem elektrisch leitenden Metalloxid und einer Kombination davon, wobei das elektrisch leitende Metalloxid ein gemischtes Metalloxid ist oder ausgewählt ist aus der Gruppe bestehend aus Oxiden von Zinn, Indium, Silber, Vanadium, Kobalt, Eisen und Molybdän und wobei die Salze ein Anion aufweisen, das ausgewählt ist aus der Gruppe bestehend aus einem Halogenid, Perchlorat, Nitrat, Tetrafluoroborat, Hexafluorostannat, Hexafluorophosphat, Hexafluoroantimonat, Methansulfonat, Trifluormethansulfonat, Acetat, Trifluoracetat, Benzoat, Pentafluorbenzoat, 4-Trifluormethylbenzoat, Benzolsulfonat, Toluolsulfonat, 4- (Trifluormethyl)benzolsulfonat, Bis(trifluormethylsulfonyl)imid, Bis(pentafluorethylsulfonyl)imid und Tris(trifluormethylsulfonyl)methid; und
b) ein erstes Blockcopolymer, umfassend
i) mindestens zwei harte A-Block-Polymereinheiten, die jeweils unabhängig aus Reaktionspartnern hergestellt sind, die Methylmethacrylat umfassen, und jeweils unabhängig eine T_{g} von mindestens 50 °C aufweisen; und
ii) mindestens eine weiche B-Block-(Meth)acryl-Polymereinheit, die eine T_{g} von nicht mehr als 20 °C aufweist und aus Reaktionspartnern hergestellt ist, die ein Alkylacrylat umfassen,
wobei das erste Blockcopolymer zu insgesamt 10 Gewichtsprozent bis 60 Gewichtsprozent die harten A-Block-Polymereinheiten umfasst, und wobei die Zusammensetzung ein antistatischer Haftkleber ist.

9. Die Zusammensetzung nach Anspruch 8, wobei die Zusammensetzung ein optisch klarer, antistatischer Haftkleber ist, der bei einer Probe der Zusammensetzung mit einer Dicke von 25 Mikrometern in einem Bereich von 400 bis 700 Nanometern eine Lichtdurchlässigkeit von mindestens 90 % bei Messung mit einem Spektralphotometer mittels des Verfahrens von ASTM D1003-07 aufweist.

10. Ein Gegenstand, umfassend:
a) ein erstes Substrat mit einer ersten Oberfläche; und
b) eine Zusammensetzung, umfassend 1) ein antistatisches Mittel, das in der Zusammensetzung gelöst, dispergiert oder suspendiert ist, wobei das antistatische Mittel ausgewählt ist aus der Gruppe bestehend aus einem Salz, einem Metall, einem elektrisch leitenden Metalloxid und einer Kombination davon, wobei das elektrisch leitende Metalloxid ein gemischtes Metalloxid ist oder ausgewählt ist aus der Gruppe bestehend aus Oxiden von Zinn, Indium, Silber, Vanadium, Kobalt, Eisen und Molybdän und wobei die Salze ein Anion aufweisen, das ausgewählt ist aus der Gruppe bestehend aus einem Halogenid, Perchlorat, Nitrat, Tetrafluoroborat, Hexafluorostannat, Hexafluorophosphat, Hexafluoroantimonat, Methansulfonat, Trifluormethansulfonat, Acetat, Trifluoracetat, Benzoat, Pentafluorbenzoat, 4-Trifluormethylbenzoat, Benzolsulfonat, Toluolsulfonat, 4-(Trifluormethyl)benzolsulfonat, Bis(trifluormethylsulfonyl)imid, Bis(pentafluorethylsulfonyl)imid und Tris(trifluormethylsulfonyl)methid, und 2) ein erstes Blockcopolymer, umfassend
i) mindestens zwei harte A-Block-Polymereinheiten, die jeweils unabhängig eine T_{g} von mindestens 50 °C aufweisen; und
ii) mindestens eine weiche B-Block-(Meth)acryl-Polymereinheit mit einer T_{g} von nicht mehr als 20 °C;
wobei das erste Blockcopolymer zu insgesamt 10 Gewichtsprozent bis 60 Gewichtsprozent die harten A-Block-Polymereinheiten umfasst, und wobei die Zusammensetzung ein antistatischer Haftkleber ist, der an die erste Oberfläche angrenzt.

11. Der Gegenstand nach Anspruch 10, wobei die Zusammensetzung einen optisch klaren, antistatischen Haftkleber, der bei einer Probe der Zusammensetzung mit einer Dicke von 25 Mikrometern in einem Bereich von 400 bis 700 Nanometern eine Lichtdurchlässigkeit von mindestens 90 % bei Messung mit einem Spektralphotometer mittels des Verfahrens von ASTM D1003-07 aufweist.

12. Der Gegenstand nach einem der Ansprüche 10 bis 11, wobei die Zusammensetzung ferner ein zweites Blockcopolymer umfasst, das mindestens eine harte C-Block-Polymereinheit mit einer T_{g} von mindestens 50 °C und mindestens eine weiche D-Block-Polymereinheit mit einer T_{g} von nicht mehr als 20 °C umfasst.

13. Der Gegenstand nach Anspruch 10, wobei das Salz ein fluoriertes Anion umfasst.

14. Der Gegenstand nach einem der Ansprüche 10 bis 13, wobei das erste Substrat einen Release-Liner, Papier, Glas, eine Polymerfolie, eine optische Folie, ein optisches Element, eine optische Anzeige oder eine elektronische Vorrichtung umfasst.

15. Der Gegenstand nach einem der Ansprüche 10 bis 14, der ferner ein zweites Substrat umfasst.

## Revendications

1. Composition comprenant :
a) un agent antistatique dissous, dispersé ou en suspension dans la composition, l'agent antistatique étant choisi dans un groupe constitué d'un sel, d'un métal, d'un oxyde métallique conduisant l'électricité et d'une combinaison de ceux-ci, où l'oxyde métallique conduisant l'électricité est un oxyde métallique mixte ou est choisi dans le groupe constitué d'oxydes d'étain, indium, argent, vanadium, cobalt, fer et molybdène, et où les sels ont un anion sélectionné dans le groupe constitué d'un halogénure, perchlorate, nitrate, tétrafluoroborate, hexafluorostannate, hexafluorophosphate, hexafluoroantimonate, méthanesulfonate, trifluorométhanesulfonate, acétate, trifluoroacétate, benzoate, pentafluorobenzoate, 4-trifluorométhylbenzoate, benzenesulfonate, toluènesulfonate, 4-(trifluorométhyl)benzènesulfonate, bis(trifluorométhylsulfonyl)imide, bis(pentafluoroéthylsulfonyl)imide et tris(trifluorométhylsulfonyl)méthide ; et
b) un premier copolymère séquencé comprenant
i) au moins deux motifs polymères de séquence A durs ayant chacun indépendamment une T_{g} d'au moins 50 °C ; et
ii) au moins un motif polymère (méth)acrylique de séquence B mou ayant une T_{g} ne dépassant pas 20 °C,
le premier copolymère séquencé comprenant au total de 10 pour cent en poids à 60 pour cent en poids des motifs polymères de séquence A durs et la composition étant un adhésif sensible à la pression antistatique.

2. Composition selon la revendication 1, où la composition est un adhésif sensible à la pression antistatique optiquement transparent ayant une transmittance lumineuse dans une plage de 400 à 700 nanomètres pour un échantillon de la composition ayant une épaisseur de 25 micromètres d'au moins 90 % quand elle est mesurée avec un spectrophotomètre en utilisant la méthode de l'ASTM D1003-07.

3. Composition selon la revendication 1, dans laquelle le sel comprend un anion fluoré.

4. Composition selon l'une quelconque des revendications 1 à 3, dans laquelle au moins l'un des motifs polymères de séquence A durs est préparé à partir de réactifs comprenant un monomère (méth)acrylate d'alkyle.

5. Composition selon l'une quelconque des revendications 1 à 4, comprenant en outre un deuxième copolymère séquencé comprenant au moins un motif polymère de séquence C dur ayant une T_{g} au moins égale à 50 °C, et au moins un motif polymère de séquence D mou ayant une T_{g} ne dépassant pas 20 °C.

6. Composition selon l'une quelconque des revendications 1 à 5, dans laquelle l'agent antistatique comprend un sel et la composition ne comprend pas plus de 15 phr d'agent antistatique.

7. Composition selon l'une quelconque des revendications 1 à 5, dans laquelle l'agent antistatique comprend un oxyde métallique conduisant l'électricité et la composition ne comprend pas plus de 100 phr d'agent antistatique.

8. Composition comprenant :
a) un agent antistatique dissous, dispersé ou en suspension dans la composition, l'agent antistatique étant sélectionné dans un groupe constitué d'un sel, d'un métal, d'un oxyde métallique conduisant l'électricité et d'une combinaison de ceux-ci, où l'oxyde métallique conduisant l'électricité est un oxyde métallique mixte ou est choisi dans le groupe constitué d'oxydes d'étain, indium, argent, vanadium, cobalt, fer et molybdène et où les sels ont un anion choisi dans le groupe constitué d'un halogénure, perchlorate, nitrate, tétrafluoroborate, hexafluorostannate, hexafluorophosphate, hexafluoroantimonate, méthanesulfonate, trifluorométhanesulfonate, acétate, trifluoroacétate, benzoate, pentafluorobenzoate, 4-trifluorométhylbenzoate, benzènesulfonate, toluènesulfonate, 4-(trifluorométhyl)benzènesulfonate, bis(trifluorométhylsulfonyl)imide, bis(pentafluoroéthylsulfonyl)imide et tris(trifluorométhylsulfonyl)méthide ; et
b) un premier copolymère séquencé comprenant
i) au moins deux motifs polymères de séquence A durs préparés chacun indépendamment à partir de réactifs comprenant le méthacrylate de méthyle et ayant chacun indépendamment une T_{g} d'au moins 50 °C ; et
ii) au moins un motif polymère de séquence B mou ayant une T_{g} ne dépassant pas 20 °C et préparé à partir de réactifs comprenant un acrylate d'alkyle, le premier copolymère séquencé comprenant au total de 10 pour cent en poids à 60 pour cent en poids des motifs polymères de séquence A durs et la composition étant un adhésif sensible à la pression antistatique.

9. Composition selon la revendication 8, où la composition est un adhésif sensible à la pression antistatique optiquement transparent ayant une transmittance lumineuse dans une plage de 400 à 700 nanomètres pour un échantillon de la composition ayant une épaisseur de 25 micromètres d'au moins 90 % quand elle est mesurée avec un spectrophotomètre en utilisant la méthode de l'ASTM D1003-07.

10. Article comprenant:
a) un premier substrat ayant une première surface ; et
b) une composition comprenant 1) un agent antistatique dissous, dispersé ou en suspension dans la composition, l'agent antistatique étant choisi dans un groupe constitué d'un sel, d'un métal, d'un oxyde métallique conduisant l'électricité et d'une combinaison de ceux-ci, où l'oxyde métallique conduisant l'électricité est un oxyde métallique mixte ou est choisi dans le groupe constitué d'oxydes d'étain, indium, argent, vanadium, cobalt, fer et molybdène et où les sels ont un anion choisi dans le groupe constitué d'un halogénure, perchlorate, nitrate, tétrafluoroborate, hexafluorostannate, hexafluorophosphate, hexafluoroantimonate, méthanesulfonate, trifluorométhanesulfonate, acétate, trifluoroacétate, benzoate, pentafluorobenzoate, 4-trifluorométhylbenzoate, benzènesulfonate, toluènesulfonate, 4-(trifluorométhyl)benzènesulfonate, bis(trifluorométhylsulfonyl)imide, bis(pentafluoroéthylsulfonyl)imide et tris(trifluorométhylsulfonyl)méthide ; et 2) un premier copolymère séquencé comprenant
i) au moins deux motifs polymères de séquence A durs ayant chacun indépendamment une T_{g} d'au moins 50 °C ; et
ii) au moins un motif polymère (méth)acrylique de séquence B mou ayant une T_{g} ne dépassant pas 20 °C ;
le premier copolymère séquencé comprenant au total de 10 pour cent en poids à 60 pour cent en poids des motifs polymères de séquence A durs et la composition étant un adhésif sensible à la pression antistatique adjacent à la première surface.

11. Article selon la revendication 10, dans lequel la composition comprend un adhésif sensible à la pression antistatique optiquement transparent ayant une transmittance lumineuse dans une plage de 400 à 700 nanomètres pour un échantillon de la composition ayant une épaisseur de 25 micromètres d'au moins 90 % quand elle est mesurée avec un spectrophotomètre en utilisant la méthode de l'ASTM D1003-07.

12. Article selon l'une quelconque des revendications 10 à 11, dans lequel la composition comprend en outre un deuxième copolymère séquencé comprenant au moins un motif polymère de séquence C dur ayant une T_{g} au moins égale à 50 °C, et au moins un motif polymère de séquence D mou ayant une T_{g} ne dépassant pas 20 °C.

13. Article selon la revendication 10, dans lequel le sel comprend un anion fluoré.

14. Article selon l'une quelconque des revendications 10 à 13, dans lequel le premier substrat comprend une protection détachable, du papier, du verre, un film polymère, un film optique, un élément optique, un affichage optique ou un dispositif électronique.

15. Article selon l'une quelconque des revendications 10 à 14, comprenant en outre un second substrat.
